# EUROPÄISCHE PATENTSCHRIFT

(11) **EP 3 928 868 B1**
(45) Veröffentlichungstag und Bekanntmachung des Hinweises auf die Patenterteilung: **27.11.2024**
(21) Anmeldenummer: 20181406.8
(22) Anmeldetag: 22.06.2020
(51) Int. Cl.: G01N 35/10, B01L 3/02

(54) **PIPETTE FÜR DEN GEBRAUCH MIT EINER EINEN KOLBEN UND EINEN ZYLINDER AUFWEISENDEN PIPETTENSPITZE ODER SPRITZE**
PIPETTE FOR USE WITH A PIPETTE TIP OR SYRINGE HAVING A PISTON AND A CYLINDER
PIPETTE À UTILISER AVEC UNE POINTE DE PIPETTE OU UNE SERINGUE COMPORTANT UN PISTON ET UN CYLINDRE

(43) Veröffentlichungstag der Anmeldung: 29.12.2021
(60) Teilanmeldung: 24160866.0
(73) Patentinhaber: Eppendorf SE, 22339 Hamburg (DE)
(72) Erfinder: KUNSCH, Matthias, 20255 Hamburg (DE); WILTH, Marc, 22145 Hamburg (DE); TUCHSCHERER, Dana, 21244 Buchholz i.d. Nordheide (DE); TESCH, Florian, 22085 Hamburg (DE); REICHMUTH, Burghardt, 22041 Hamburg (DE)
(74) Vertreter: Hauck Patentanwaltspartnerschaft mbB

(56) Entgegenhaltungen:
- EP-A1- 0 046 461
- EP-B1- 0 085 854
- EP-B1- 0 143 796
- EP-B1- 0 566 041
- GB-A- 2 045 641
- US-B1- 6 455 006

## Beschreibung

Die Erfindung betrifft eine Pipette für den Gebrauch mit einer einen Kolben und einen Zylinder aufweisenden Pipettenspitze oder Spritze.

Pipetten werden insbesondere in wissenschaftlichen und industriellen Laboren mit medizinischen, molekularbiologischen und pharmazeutischen Anwendungsgebieten zum Dosieren ausgewählter Volumen von Flüssigkeiten eingesetzt. Bei den Flüssigkeiten kann es sich insbesondere um homogene (einphasige) Flüssigkeiten bestehend aus einer einzigen flüssigen Komponente oder aus einer homogenen Mischung mehrerer flüssiger Komponenten (Lösungen) handeln. Ferner können die Flüssigkeiten heterogene (mehrphasige) Gemische einer Flüssigkeit mit einer weiteren Flüssigkeit (Emulsionen) oder einem Feststoff (Suspension) sein.

Bekannte Pipetten für den Gebrauch mit einer Pipettenspitze weisen ein stielförmiges Pipettengehäuse mit einem Zapfen (Ansatz) am unteren Ende zum Aufklemmen einer Pipettenspitze auf. Der Zapfen ist vielfach ein konischer, zylindrischer oder abschnittsweise konischer und zylindrischer Vorsprung und wird auch als "Arbeitskonus" bezeichnet. Eine Pipettenspitze ist ein hohles Röhrchen mit einer Spitzenöffnung am unteren Ende und einer Aufstecköffnung am oberen Ende, mit dem die Pipettenspitze auf den Zapfen aufklemmbar ist. Die Flüssigkeit wird in die Pipettenspitze aufgenommen und aus dieser abgegeben. Die Aufnahme und Abgabe der Flüssigkeit wird mittels der Pipette gesteuert. Festvolumenpipetten dienen zum Pipettieren konstanter Volumen. Bei variablen Pipetten ist das zu dosierende Volumen einstellbar. Zur Anzeige des eingestellten Volumens dient ein mechanisches Zählwerk. Zum Einstellen des Volumens ist der Hub einer Antriebseinrichtung mittels einer Einstelleinrichtung einstellbar, die mit dem Zählwerk gekoppelt ist. Die Pipettenspitze wird nach dem Gebrauch vom Ansatz gelöst und kann gegen eine frische Pipettenspitze ausgetauscht werden. Hierdurch können bei nachfolgenden Pipettierungen Kreuzkontaminationen vermieden werden.

Luftpolsterpipetten weisen im Pipettengehäuse ein Kolben-Zylinder-System auf, das über einen Kanal mit einem Durchgangsloch im Zapfen verbunden ist. Pipettenspitzen für Luftpolsterpipetten (Luftpolster-Pipettenspitzen) haben keinen integrierten Kolben. Durch Verlagern des Kolbens in dem Zylinder mittels der Antriebseinrichtung wird ein Luftpolster bewegt, um Flüssigkeit in eine auf den Zapfen aufgeklemmte Pipettenspitze einzusaugen und aus dieser auszustoßen. Nachteilig bei Luftpolsterpipetten sind Dosierfehler aufgrund von Veränderungen der Länge des Luftpolsters durch das Gewicht der eingesaugten Flüssigkeit und von Änderungen der Temperatur, des Luftdruckes und der Luftfeuchtigkeit. Problematisch kann auch eine Kontamination der Pipette durch Aerosole sein.

Direktverdrängerpipetten werden mit Pipettenspitzen mit integriertem Kolben (Direktverdränger-Pipettenspitzen) gebraucht. Diese Art von Pipetten weist einen Zapfen zum Befestigen der Pipettenspitze und eine mit dem integrierten Kolben (Spitzenkolben) koppelbare Antriebseinrichtung zum Bewegen des Kolbens auf. Der Kolben kommt direkt in Kontakt mit der Flüssigkeit, sodass die nachteiligen Auswirkungen eines Luftpolsters entfallen. Direktverdrängerpipetten eignen sich insbesondere für die Dosierung von Flüssigkeiten mit hohem Dampfdruck, hoher Viskosität oder hoher Dichte und Anwendungen in der Molekularbiologie, bei denen es auf Aerosolfreiheit ankommt, um Kontaminationen zu vermeiden.

Pipettenspitzen oder Spritzen für den einmaligen Gebrauch oder für Wiederverwendung mit einer Pipette bestehen aus Kunststoff oder aus Glas.

Bei der Direktverdrängerpipette Biomaster^{®} 4830 der Eppendorf AG weist die Antriebseinrichtung eine Hubstange zum Verlagern eines Kolbens in einer Pipettenspitze auf, die ein hohles unteres Hubstangenteil und ein von oben in das untere Hubstangenteil eingeführtes oberes Hubstangenteil aufweist. Das obere Hubstangenteil ist mit einem Bedienelement verbunden, das aus einem oberen Ende des Pipettengehäuses heraussteht. Eine Pipettenspitze Mastertip^{®} der Eppendorf AG mit einem Nennvolumen von 20 µl ist auf einen Zapfen der Pipette aufklemmbar. Durch Drücken des Bedienelementes kann die Hubstange nach unten verschoben werden, sodass ein oberes Ende der Kolbenstange eines Spitzenkolbens der Pipettenspitze in das untere Hubstangenteil eingepresst wird. Beim Verlagern der Hubstange nach unten bis zu einem unteren Anschlag wird eine Federeinrichtung vorgespannt. Nach Entlastung des Bedienelementes verlagert die Federeinrichtung die Hubstange bis zu einem oberen Anschlag, wobei der Spitzenkolben mitgenommen wird und Flüssigkeit in die Pipettenspitze eingesaugt werden kann. Die eingesaugte Flüssigkeit kann durch erneutes Drücken des Bedienelementes bis zum unteren Anschlag abgegeben werden. Zum Lösen der Pipettenspitze muss der Anwender mit erhöhter Kraft auf das Bedienelement drücken, sodass eine weitere Federeinrichtung einfedert, das obere Hubstangenteil im unteren Hubstangenteil nach unten verlagert wird, den Kolben aus dem unteren Hubstangenteil herausdrückt und die Pipettenspitze vom Zapfen abdrückt. Das Pipettieren hochviskoser Flüssigkeiten mit einer Direktverdrängerpipette mit einer Federeinrichtung zum Verlagern der Hubstange nach oben ist problematisch, da die Federeinrichtung zu schwach für das Einsaugen hochviskoser Flüssigkeiten in die Pipettenspitze sein kann. Eine Federeinrichtung mit einer stärkeren Feder würde hohe Betätigungskräfte erfordern.

Die EP 0 656 229 B1 beschreibt ein Pipettensystem, das eine manuell handhabbare Pipette und eine Spritze umfasst. Die Pipette weist in einem Pipettengehäuse eine Aufnahme für einen Befestigungsabschnitt an einem Spritzenzylinder und in einem Aufnahmekörper eine Kolbenaufnahme für den Spritzenkolben auf. Mittels radial zustellbarer Greifeinrichtungen ist der Befestigungsabschnitt in der Aufnahme und der Kolben in der Kolbenaufnahme fixierbar. Der Aufnahmekörper ist mit einem Rückbewegungshebel verbunden, der aus einem Axialschlitz des Gehäuses herausragt. Durch Verschieben des Rückbewegungshebels nach oben ist Flüssigkeit in eine mit der Pipette verbundene Spritze aufnehmbar. Die Pipette ist als Dispenser ausgebildet und weist zum schrittweisen abgeben von Teilmengen der aufgenommenen Flüssigkeit (Dispensieren) aus der Spritze einen Repetiermechanismus auf, der eine mit der Kolbenaufnahme verbundene Zahnstange, eine mittels eines Drehknopfes verstellbare Abdeckung der Zahnung der Zahnstange und eine schwenkbar an einem Antriebshebel gelagerte Klinke aufweist. Die Klinke wird von einer Feder zur Zahnstange hin vorgespannt. Beim Schwenken des Antriebshebels nach unten gleitet die Klinke über die Abdeckung, greift nach dem Überschreiten des unteren Endes der Abdeckung in die Zahnung ein und verlagert die Zahnstange nach unten. Hierbei wird Flüssigkeit aus der Spritze abgegeben, wobei das abgegebene Volumen von der Stellung der Abdeckung abhängt. Durch wiederholtes Betätigen des Abgabehebels ist die Spritze schrittweise entleerbar. Das Pipettensystem ist zwar für das Dispensieren hochviskoser Flüssigkeiten geeignet. Für die Aufnahme und Abgabe der Flüssigkeit muss der Benutzer jedoch umgreifen, da er hierfür verschiedene Hebel betätigen muss.

Die EP 0 566 041 B1 beschreibt eine Schrittpipette bzw. Dispenser für den Gebrauch mit einer Spritze, die einen Repetiermechanismus mit einer Zahnstange, eine Abdeckung und einer Klinke an einem Abgabehebel aufweist. Die Zahnstange ist mit einer dazu parallelen Zahnstange über ein dazwischen angeordnetes Zahnrad gekoppelt. Durch Herunterdrücken eines Betätigungsknopfes am oberen Ende der letztgenannten Zahnstange ist die Spritze befüllbar. Aufgrund der Kopplung durch das Zahnrad wird zugleich die erstgenannte Zahnstange nach oben verlagert. Die befüllte Spritze ist durch mehrfaches Betätigen des Abgabehebels schrittweise entleerbar. Der Abgabehebel und der Betätigungsknopf sind auf verschiedenen Seiten am oberen Ende des Pipettengehäuses angeordnet. Für das Aufnehmen und Abgeben von Flüssigkeiten ist ein Umgreifen erforderlich.

Die EP 0 085 854 B1 beschreibt eine Pipette für den Gebrauch mit einer Spritze mit zwei wechselseitig gegeneinander bewegbaren und durch ein Zahnrad gekoppelten Zahnstangen, von denen eine mit einer Hubstange für den Kolben verbunden ist. Für die Kolbenbewegungen nach unten und nach oben ist nur ein Betätigungshebel vorhanden. Zwischen dem Betätigungshebel und den Zahnstangen ist ein Anschlagelement vorhanden, das wechselweise in den Weg der einen Zahnstange und der anderen Zahnstange verlagerbar ist. Hierfür kommt das Anschlagelement mit einem bewegbaren Nocken in Eingriff, der durch eine Zugfeder zu einem Anschlag gezogen wird. Eine der beiden Zahnstangen ist mit einem Anschlagansatz verbunden, der auf einen vom Nocken vorstehenden Hebel trifft und den Nocken von dem Anschlag wegschwenkt, wenn diese Zahnstange nach oben verlagert ist. Je nach Stellung des Nockens wird der Schieber so verlagert, dass bei Betätigung des Betätigungshebels die jeweils oben angeordnete Zahnstange nach unten mitgenommen wird. Durch die Kopplung über das Zahnrad wird hierbei die andere Zahnstange nach oben verlagert. Infolgedessen kann durch aufeinanderfolgendes Betätigen desselben Betätigungshebels Flüssigkeit in die Spritze aufgenommen und aus dieser abgegeben werden. Bei dieser Pipette ist das Getriebe für die wechselseitige Verlagerung der Zahnstangen integral mit der Antriebsmechanik ausgebildet. Der Anschlagansatz, über den die Zahnstange auf die Getriebesteuerung einwirkt, ist Bestandteil des Getriebes. Nachteilig ist, dass die Mechanik eine Vielzahl Bauteile aufweist, die viel Platz in Anspruch nehmen und deren Montage aufwendig ist.

Davon ausgehend liegt der Erfindung die Aufgabe zugrunde, eine Pipette für den Gebrauch mit einer einen Kolben und einen Zylinder aufweisenden Pipettenspitze oder Spritze zu schaffen, die bei einfacher Bedienung eine weniger aufwändige, platzsparendere und einfacher zu montierende Mechanik aufweist.

Die Aufgabe wird durch eine Pipette mit den Merkmalen von Anspruch 1 gelöst. Gemäß einer Alternative wird die Aufgabe durch eine Pipette mit den Merkmalen von Anspruch 8 gelöst. Vorteilhafte Ausführungsarten der Pipette sind in Unteransprüchen angegeben.

Die erfindungsgemäße Pipette für den Gebrauch mit einer einen Kolben und einen Zylinder aufweisenden Pipettenspitze oder Spritze nach Anspruch 1 umfasst
- ein stielförmiges Pipettengehäuse,
- eine erste Halteeinrichtung am unteren Ende des Pipettengehäuses zum lösbaren Halten des Zylinders,
- eine im Pipettengehäuse angeordnete Hubstange mit einer zweiten Halteeinrichtung am unteren Ende zum lösbaren Halten des oberen Endes einer Kolbenstange des Kolbens und Verlagern eines Dichtbereichs des Kolbens in einem Kolbenlaufbereich oberhalb einer Spitzenöffnung am unteren Ende des Zylinders,
- eine Anordnung aus zwei parallelen und zur gleichzeitigen Verlagerung in entgegengesetzten Richtungen über eine Umlenkeinrichtung miteinander gekoppelten Stangen im Pipettengehäuse, wobei eine der beiden Stangen mit der Hubstange gekoppelt ist,
- ein vom Pipettengehäuse nach außen vorstehendes, relativ zum Pipettengehäuse verlagerbares Bedienelement und
- ein im Pipettengehäuse angeordnetes Getriebe mit einem durch das Bedienelement angetriebenen Antrieb und einem die Stangen antreibenden Abtrieb, wobei der Antrieb aus einem beweglichen Eingangsglied besteht, der Abtrieb mindestens ein bewegliches Ausgangsglied umfasst und das Getriebe ausgebildet ist, bei aufeinanderfolgenden Verlagerungen des Eingangsgliedes aus derselben Ausgangsstellung durch das Bedienelement abwechselnd mit dem Ausgangsglied die eine Stange und die andere Stange nach unten zu verlagern und bei der das Ausgangsglied des Getriebes ein Mitnehmerelement ist und das Getriebe ausgebildet ist, das Mitnehmerelement wechselweise in eine Position oberhalb der einen Stange zu verlagern und diese mittels des Mitnehmerelements nach unten zu verlagern und nachfolgend in eine Position oberhalb der anderen Stange zu verlagern und diese mittels des Mitnehmerelementes nach unten zu verlagern, und dadurch gekennzeichnet ist, dass
- das Mitnehmerelement eine um eine zu den Stangen parallele Achse drehbar gelagerte Flügelscheibe ist, die bei aufeinanderfolgenden Verlagerungen des Eingangsgliedes aus einer Ausgangsstellung abwechselnd mit einem Flügel oberhalb der einen Stange und zugleich mit einem Freistich oberhalb der anderen Stange und mit einem Freistich oberhalb der einen Stange und zugleich mit einem Flügel oberhalb der anderen Stange positionierbar ist

Die erfindungsgemäße Pipette für den Gebrauch mit einer einen Kolben und einen Zylinder aufweisenden Pipettenspitze oder Spritze nach Anspruch 8 umfasst
- ein stielförmiges Pipettengehäuse,
- eine erste Halteeinrichtung am unteren Ende des Pipettengehäuses zum lösbaren Halten des Zylinders,
- eine im Pipettengehäuse angeordnete Hubstange mit einer zweiten Halteeinrichtung am unteren Ende zum lösbaren Halten des oberen Endes einer Kolbenstange des Kolbens und Verlagern eines Dichtbereichs des Kolbens in einem Kolbenlaufbereich oberhalb einer Spitzenöffnung am unteren Ende des Zylinders,
- eine Anordnung aus zwei parallelen und zur gleichzeitigen Verlagerung in entgegengesetzten Richtungen über eine Umlenkeinrichtung miteinander gekoppelten Stangen im Pipettengehäuse, wobei eine der beiden Stangen mit der Hubstange gekoppelt ist,
- ein vom Pipettengehäuse nach außen vorstehendes, relativ zum Pipettengehäuse in axialer Richtung der Hubstange verlagerbares Bedienelement und
- ein im Pipettengehäuse angeordnetes Getriebe mit einem durch das Bedienelement angetriebenen Antrieb und einem die Stangen antreibenden Abtrieb, wobei der Antrieb aus einem beweglichen Eingangsglied besteht, der Abtrieb mindestens ein bewegliches Ausgangsglied umfasst und das Getriebe ausgebildet ist, bei aufeinanderfolgenden Verlagerungen des Eingangsliedes aus derselben Ausgangsstellung durch das Bedienelement abwechselnd mit dem Ausgangsglied die eine Stange und die andere Stange nach unten zu verlagern und bei der das Ausgangsglied des Getriebes ein Mitnehmerelement ist und das Getriebe ausgebildet ist, das Mitnehmerelement wechselweise in eine Position oberhalb der einen Stange zu verlagern und diese mittels des Mitnehmerelements nach unten zu verlagern und nachfolgend in eine Position oberhalb der anderen Stange zu verlagern und diese mittels des Mitnehmerelementes nach unten zu verlagern, und dadurch gekennzeichnet ist, dass
- das Getriebe einen das Mitnehmerelement und eine horizontale Steuerzapfenführung aufweisenden Laufbahnträger mit auf verschiedenen Seiten einer vertikalen ersten Ebene angeordneten Laufbahnen aufweist, die auf verschiedenen Seiten einer zu der ersten Ebene senkrechten zweiten Ebene jeweils einen vertikalen ersten Abschnitt mit einer zum unteren oder oberen Ende hin ansteigenden Auflaufschräge und am anderen Ende des ersten Abschnittes jeweils einen zu der anderen Seite der zweiten Ebene hin abgewinkelten oder gekrümmten zweiten Abschnitt aufweisen, bei dem das Getriebe ferner einen mit dem Bedienelement verbundenen und an einer Steuerzapfenführung horizontal verlagerbar geführten Steuerzapfen aufweist und bei dem das Getriebe einen lagefest im Pipettengehäuse angeordneten Zapfenträger mit einem Zapfenlager, in dem ein Führungszapfen senkrecht zu der ersten Ebene verlagerbar angeordnet ist, aufweist, sodass bei einer vertikalen Verlagerung des Laufbahnträgers der Führungszapfen an einem von dem Zapfenträger vorstehenden Ende von der Auflaufschräge der einen Laufbahn verlagerbar ist, bis der Führungszapfen mit dem anderen Ende in die andere Laufbahn eingreift, in der er bei der nachfolgenden Verlagerung des Laufbahnträgers in entgegengesetzter Richtung entlang des abgewinkelten oder gekrümmten zweiten Abschnittes geführt und hierdurch der Laufbahnträger mit dem Mitnehmerelement seitlich verlagert wird, der Führungszapfen bei einer nachfolgenden vertikalen Verlagerung des Laufbahnträgers in entgegengesetzter Richtung an dem vorstehenden Ende von der Auflaufschrägen der anderen Laufbahn verlagert wird, sodass er mit dem anderen Ende in die eine Laufbahn eingreift, in der der Führungszapfen bei einer nachfolgenden vertikalen Verlagerung des Laufbahnträgers in entgegengesetzter Richtung entlang des abgewinkelten oder gekrümmten zweiten Abschnittes geführt und hierdurch der Laufbahnträger mit dem Mitnehmerelement in entgegengesetzter Richtung seitlich verlagert wird.

Bei der erfindungsgemäßen Pipette kann die abwechselnde Verlagerung der beiden Stangen nach unten durch Betätigen eines einzigen Bedienelements gesteuert werden. Durch die Betätigung wird das Bedienelement verlagert und ein Antrieb eines Getriebes angetrieben. Der Antrieb besteht aus einem beweglichen Eingangsglied, das durch Betätigen des Bedienelementes verlagert wird. Ein Abtrieb des Getriebes umfasst mindestens ein bewegliches Ausgangsglied. Das Getriebe ist so ausgebildet, dass bei aufeinanderfolgenden Verlagerungen des Eingangsgliedes aus derselben Ausgangsstellung, die durch das Bedienelement bewirkt werden, das Ausgangsglied abwechselnd die eine Stange und die andere Stange nach unten verlagert. Eine der beiden Stangen ist mit der Hubstange gekoppelt. Gemäß einer Ausführungsart ist die Stange über ein Getriebe mit der Hubstange gekoppelt oder fest mit dieser verbunden, z. B. indem die Stange einteilig mit der Hubstange ausgebildet ist. Infolgedessen kann durch wiederholtes Betätigen des Bedienelementes erreicht werden, dass Flüssigkeit in die Pipettenspitze oder Spritze aufgenommen und danach aus dieser abgegeben wird. Die Aufnahme der Flüssigkeit in die Pipettenspitze oder Spritze kann in einem einzigen Schritt erfolgen und die Abgabe der Flüssigkeit aus der Pipettenspitze kann in einem einzigen oder in mehreren Schritten erfolgen. Dadurch, dass der Antrieb des Getriebes aus einem beweglichen Eingangsglied besteht, wird das Getriebe allein durch Betätigen des Bedienelementes angetrieben und gesteuert. Anders als bei der EP 0 085 854 B1 wird nicht die Position einer Zahnstange über ein weiteres Eingangsglied in das Getriebe zurückgeführt und für die Steuerung des Getriebes herangezogen. Hierdurch wird ein Getriebe mit weniger Bauteilen, geringerem Platzbedarf und einfacher Montierbarkeit ermöglicht. Die Erfindung begünstigt die Ausführung des Getriebes als Baugruppe, die komplett vormontiert und mit weiteren Baugruppen und/oder Bauteilen zu der fertigen Pipette montiert werden kann.

Gemäß einer Ausführungsart der Erfindung sind die beiden Stangen Zahnstangen und ist die Umlenkeinrichtung ein Zahnrad, welches mit den beiden Zahnstangen kämmt, um diese gleichzeitig in entgegengesetzten Richtungen zu verlagern. Gemäß einer anderen Ausführungsart ist die Umlenkeinrichtung ein zweiarmiger Hebel (Wippe) mit einem lagerfest im Pipettengehäuse angeordneten Drehgelenk und Verbindung über Schubgelenke mit den Stangen oder ein an den Enden mit den Stangen verbundenes und über eine Umlenkrolle geführtes Zugseil.

Bei der Erfindung ist das Ausgangsglied des Getriebes ein Mitnehmerelement und das Getriebe ausgebildet, das Mitnehmerelement in eine Position oberhalb der einen Stange zu verlagern und diese mittels des Mitnehmerelementes nach unten zu verlagern und nachfolgend das Mitnehmerelement in eine Position oberhalb der anderen Stange zu verlagern und diese mittels des Mitnehmerelementes nach unten zu verlagern. Bei aufeinanderfolgenden Verlagerungen des Eingangsgliedes aus derselben Ausgangsstellung durch das Betätigungselement wird das Mitnehmerelement in Positionen oberhalb verschiedener Stangen verlagert. Dies erfolgt beim Verlagern des Mitnehmerelementes nach oben und/oder nach unten. Erfolgt dies beim Verlagern nach oben in die Ausgangsstellung, wird bei der vorangehenden Verlagerung des Eingangsgliedes aus der Ausgangsstellung nach unten die Stange, über die das Mitnehmerelement zuvor eingestellt worden ist, mit nach unten verlagert. Erfolgt dies bei der Verlagerung aus der Ausgangsstellung nach unten, wird das Mitnehmerelement zuerst in eine Position oberhalb einer anderen Stange gebracht und diese bei weiterer Verlagerung des Mitnehmerelements nach unten mitgenommen. Bei einer weiteren Ausführungsart wird das Mitnehmerelement bei der Verlagerung nach unten zuerst oberhalb derselben Stange ein wenig in Richtung auf die Position oberhalb der anderen Stange zu verlagert, wird die erstgenannte Stange bei weiterer Verlagerung des Mitnehmerelements nach unten mitgenommen und wird das Mitnehmerelement erst bei Verlagerung des Mitnehmerelements nach oben in die Position oberhalb der zweitgenannten Stange verlagert.

Gemäß einer weiteren Ausführungsart nach Anspruch 1 löst die Bewegung des Bedienelements eine rotatorische Bewegung eines Mitnehmerelementes aus. Dafür weist die Pipette ein oder mehrere innenliegende mechanische Bauteile auf, die durch ihre spezielle Formgebung der Laufbahnen und Auflaufschrägen in Rotation gebracht werden. Das rotierende Bauteil hat eine Geometrie, die eine wechselseitige Ansteuerung bzw. Freigabe der Zahnstangen gewährleistet.

Bei der Erfindung nach Anspruch 1 ist das Mitnehmerelement eine um eine zu den Stangen parallele Achse drehbar gelagerte Flügelscheibe, die bei aufeinanderfolgenden Verlagerungen des Eingangsgliedes aus einer Ausgangsstellung abwechselnd mit einem Flügel oberhalb der einen Stange und zugleich mit einem Freistich oberhalb der anderen Stange und mit einem Freistich oberhalb der einen Stange und zugleich mit einem Flügel oberhalb der anderen Stange positionierbar ist. Zum Verlagern einer Stange wird die Flügelscheibe mit einem Flügel oberhalb des oberen Endes der Stange positioniert, sodass die Stange mittels des Flügels nach unten gedrückt werden kann. Die andere Stange wird von dem Freistich aufgenommen, sodass sie nicht mit nach unten verlagert wird. Gemäß einer weiteren Ausführungsart ist das Mitnehmerelement um eine zwischen den Stangen ausgerichtete Achse drehbar gelagert. Gemäß einer bevorzugten Ausführungsart ist die Achse koaxial auf die Hubstange ausgerichtet. Hierdurch wird bei unterschiedlichen Positionen des Ausgangsgliedes eine gleichmäßige Kraftübertragung auf die Hubstange erreicht.

Gemäß einer weiteren Ausführungsart weist die Flügelscheibe mehrere Flügel und jeweils einen Freistich zwischen zwei benachbarten Flügeln auf. Gemäß einer weiteren Ausführungsart weist die Flügelscheibe insgesamt zwei Flügel und insgesamt zwei Freistriche auf.

Gemäß einer weiteren Ausführungsart weist das Getriebe einen das Mitnehmerelement umfassenden Stangenantrieb mit mindestens einer von oben abtastbaren und in einer Umfangsrichtung abfallenden ersten Steuerkurve und mindestens einem ersten Führungselement, einen mittels des Bedienelementes in axialer Richtung der Stange von oben gegen eine erste Steuerkurve andrückbaren Auslöser mit einem seitlichen Anschlag und mindestens ein lagefest im Pipettengehäuse angeordnetes zweites Führungselement auf, das den Stangenantrieb an einem ersten Führungselement in Axialrichtung führt, sodass bei einer axialen Verlagerung des Auslösers nach unten der Stangenantrieb in Axialrichtung geführt wird, bis das obere Ende des ersten Führungselements über das untere Ende des zweiten Führungselements hinaus verlagert ist und der Stangenantrieb mit der ersten Steuerkurve bis zur Anlage des ersten Führungselements an dem seitlichen Anschlag des Auslösers teilweise unter das untere Ende des zweiten Führungselementes gedreht wird, und bei einer Rückverlagerung des Auslösers nach oben das erste Führungselement vom seitlichen Anschlag freikommt, wenn das untere Ende des ersten Führungselements über das obere Ende des seitlichen Anschlags hinaus verlagert ist, und der Stangenantrieb mit der ersten Steuerkurve am unteren Ende des zweiten Führungselements vorbeigleitet, bis der Stangenantrieb mit dem ersten Führungselement in eine an einem zweiten Führungselement anliegende Position gedreht ist. Beim Verlagern des Auslösers nach unten wird zunächst der Stangenantrieb nach unten mitgenommen und dann mit der ersten Steuerkurve teilweise unter das zweite Führungselement gedreht. Beim weiteren Verlagern des Auslösers nach unten wird der Stangenantrieb weiter nach unten mitgenommen. Hierbei bleibt das Mitnehmerelement oberhalb derselben Stange, über der es bereits zu Beginn der Verlagerung des Auslösers nach unten positioniert war. Bei Rückverlagerung des Auslösers nach oben kommt der Stangenantrieb mit dem ersten Führungselement vom seitlichen Anschlag des Auslösers frei, sodass der Stangenantrieb mit der ersten Steuerkurve am unten Ende des zweiten Führungselementes weitergedreht wird, bis das Mitnehmerelement oberhalb einer anderen Stange angeordnet ist. Bei dieser Ausführungsart ist die Mechanik zum Drehen des Mitnehmerelementes ähnlich wie das Getriebe eines Kugelschreibers ausgebildet, mit dem die Kugelschreibermine durch Drücken desselben Drückers in eine ausgefahrene Schreibposition und in eine zurückgezogene Position gebracht werden kann. Eine solche Mechanik ist beispielsweise in der US 3,205,863 beschrieben. In Abweichung von dem Getriebe eines Kugelschreibers wird die Drehung nicht für das Herausfahren und Einziehen einer Kugelschreibermine verwendet, sondern für die Positionierung der Flügelscheibe oberhalb der Stangen.

Gemäß einer weiteren Ausführungsart weist der Auslöser mindestens eine von unten abtastbare, in derselben Umfangrichtung wie die erste Steuerkurve abfallende zweite Steuerkurve auf, mit der der Auslöser von oben gegen die erste Steuerkurve andrückbar ist. Die zweite Steuerkurve dreht den Stangenantrieb mit der ersten Steuerkurve teilweise unter das untere Ende des zweiten Führungselementes, wenn das obere Ende des ersten Führungselementes das untere Ende des zweiten Führungselementes überschreitet. Gemäß einer weiteren Ausführungsart ist die zweite Steuerkurve am unteren Ende des seitlichen Anschlages des Auslösers ausgebildet. Gemäß einer weiteren Ausführungsart ist die erste Steuerkurve, die mit der zweiten Steuerkurve zusammenwirkt, dieselbe erste Steuerkurve, die unter das untere Ende des ersten Führungselementes gedreht wird. Gemäß einer anderen Ausführungsart ist die erste Steuerkurve, die mit der zweiten Steuerkurve zusammenwirkt, weiter oben und radial nach innen versetzt bezüglich der mindestens einer ersten Steuerkurve angeordnet, die unter das erste Führungselement gedreht wird.

Gemäß einer weiteren Ausführungsart weist das zweite Führungselement am unteren Ende mindestens eine von unten abtastbare, in derselben Umfangsrichtung wie die erste Steuerkurve abfallende dritte Steuerkurve auf, an der die erste Steuerkurve bei der Rückverlagerung des Auslösers nach oben vorbeigleitet. Bei der Rückverlagerung des Auslösers nach oben gleitet die erste Steuerkurve auf der dritten Steuerkurve ab, wodurch der Stangenantrieb weitergedreht wird, bis das Mitnehmerelement oberhalb einer anderen Zahnstange positioniert ist.

Gemäß einer weiteren Ausführungsart wird der Auslöser von einer am Stangenantrieb abgestützten Distanzfeder vom Stangenantrieb weggedrückt. Entgegen der Wirkung der Distanzfeder ist der Auslöser gegen den Stangenantrieb verlagerbar. Nach Entlastung des Auslösers drückt die Distanzfeder den Auslöser vom Stangenantrieb weg. Hierdurch kommt das erste Führungselement vom seitlichen Anschlag des Auslösers frei, so dass der Stangenantrieb mit dem Mitnehmerelement in eine Position oberhalb einer anderen Stange drehbar ist. Gemäß einer weiteren Ausführungsart wird der Stangenantrieb von einer an einem lagefest im Pipettengehäuse angeordneten Widerlager abgestützten Druckfeder gegen den Auslöser gedrückt. Entgegen der Wirkung der Druckfeder ist der Stangenantrieb mittels des Auslösers nach unten verlagerbar. Nach Entlastung des Auslösers drückt die Druckfeder den Stangenantrieb nach oben gegen das zweite Führungselement, das gemäß einer bevorzugten Ausführungsart durch die dritte Steuerkurve gebildet ist. Die dritte Steuerkurve bzw. das zweite Führungselement erzeugt dann die Drehung des Stangenantriebs.

Bei der Alternative der Erfindung nach Anspruch 8 umfasst das Getriebe einen das Mitnehmerelement und eine horizontale Steuerzapfenführung aufweisenden Laufbahnträger mit auf verschiedenen Seiten einer vertikalen ersten Ebene angeordneten Laufbahnen, die auf verschiedenen Seiten einer zu der ersten Ebene senkrechten zweiten Ebene jeweils einen vertikalen ersten Abschnitt mit einer zum unteren oder oberen Ende hin ansteigenden Auflaufschräge und am anderen Ende des ersten Abschnittes jeweils einen zu der anderen Seite der zweiten Ebene hin abgewinkelten oder gekrümmten zweiten Abschnitt aufweisen, einen mit dem Bedienelement verbundenen und an einer Steuerzapfenführung horizontal verlagerbar geführten Steuerzapfen und einen lagefest im Pipettengehäuse angeordneten Zapfenträger mit einem Zapfenlager, in dem ein Führungszapfen senkrecht zu der ersten Ebene verlagerbar angeordnet ist, sodass bei einer vertikalen Verlagerung des Laufbahnträgers der Führungszapfen an einem von dem Zapfenträger vorstehenden Ende von der Auflaufschräge der einen Laufbahn verlagerbar ist, bis der Führungszapfen mit dem anderen Ende in die andere Laufbahn eingreift, in der er bei einer nachfolgenden vertikalen Verlagerung des Laufbahnträgers in entgegengesetzter Richtung entlang des abgewinkelten oder gekrümmten zweiten Abschnittes geführt und hierdurch der Laufbahnträger mit dem Mitnehmerelement seitlich verlagert wird, der Führungszapfen bei einer nachfolgenden vertikalen Verlagerung des Laufbahnträgers in entgegengesetzter Richtung an dem vorstehenden Ende von der Auflaufschrägen der anderen Laufbahn verlagert wird, sodass er mit dem anderen Ende in die eine Laufbahn eingreift, in der der Führungszapfen bei einer nachfolgenden vertikalen Verlagerung des Laufbahnträgers in entgegengesetzter Richtung entlang des abgewinkelten oder gekrümmten zweiten Abschnittes geführt und hierdurch der Laufbahnträger mit dem Mitnehmerelement in entgegengesetzter Richtung seitlich verlagert wird. Hierdurch gelangt der Laufbahnträger in die anfängliche Lage zurück, von der ausgehend der zuvor beschriebene Bewegungszyklus wiederholt werden kann. Durch das seitliche und vertikale Verlagern ist der Laufbahnträger mit dem Mitnehmerelement abwechselnd über verschiedenen Stangen positionierbar und sind die Stangen abwechselnd nach unten verlagerbar.

Gemäß einer weiteren Ausführungsart nach Anspruch 8 ist das vom ersten Abschnitt entfernte Ende des zweiten Abschnittes jeder Laufbahn mit einem vertikalen dritten Abschnitt verbunden.

Gemäß einer Ausführungsart der Erfindung nach Anspruch 8 weist der Laufbahnträger einen Rahmen mit zwei parallelen plattenförmigen Rahmenteilen auf, die durch Abstandshalter voneinander auf Abstand gehalten sind, die Laufbahnen an den Innenseiten aufweisen und zwischen denen der Zapfenträger angeordnet ist. Gemäß einer weiteren Ausführungsart weist ein Rahmenteil an den Enden leistenartige Vorsprünge auf, welche die Abstandshalter bilden. Gemäß einer weiteren Ausführungsart ist der Zapfenträger eine Leiste, die zwischen die beiden plattenförmigen Rahmenteile eingreift. Gemäß einer weiteren Ausführungsart ist das obere Ende und/oder das untere Ende des Zapfenträgers lagefest im Pipettengehäuse angeordnet. Gemäß einer weiteren Ausführungsart ist das Mitnehmerelement die Unterseite des Laufbahnträgers.

Gemäß einer weiteren Ausführungsart sind die Laufbahnen Nuten an den Innenseiten der Rahmenteile und weisen die Nuten an den Auflaufschrägen eine zu den Enden der Nuten allmählich abnehmende Nutentiefe auf. Die Nuten gewährleisten eine sichere Führung des Führungszapfens in den Laufbahnen.

Gemäß einer weiteren Ausführungsart ist das Getriebe vollständig oberhalb der Stangen angeordnet. Durch die Anordnung des Getriebes vollständig oberhalb der Stangen wird eine besonders kompakte und einfach zu montierende Bauweise ermöglicht.

Gemäß einer weiteren Ausführungsart ist das Getriebe eine Baugruppe. Hierdurch wird insbesondere die Montage erleichtert.

Bei Ausführung des Ausgangsgliedes als Mitnehmerelement braucht die Baugruppe mit dem Mitnehmerelement nur oberhalb der Stangen montiert zu werden, da das Ausgangsglied nicht fest mit den Stangen verbunden wird.

Ferner betrifft die Erfindung eine Pipette für den Gebrauch mit einer einen Kolben und einen Zylinder aufweisenden Pipettenspitze oder -spritze, umfassend
- ein stielförmiges Pipettengehäuse,
- eine erste Halteeinrichtung am unteren Ende des Pipettengehäuses zum lösbaren Halten des Zylinders,
- eine im Pipettengehäuse angeordnete Hubstange mit einer zweiten Halteeinrichtung am unteren Ende zum lösbaren Halten des oberen Endes einer Kolbenstange des Kolbens und Verlagern eines Dichtbereichs des Kolbens in einem Kolbenlaufbereich oberhalb einer Spitzenöffnung am unteren Ende des Zylinders,
- ein vom Pipettengehäuse nach außen vorstehendes, relativ zum Pipettengehäuse in axialer Richtung der Hubstange verlagerbares Bedienelement und
- ein im Pipettengehäuse angeordnetes Getriebe mit einem durch das Bedienelement angetriebenen Antrieb und einem die Hubstange antreibenden Abtrieb, wobei der Abtrieb eine mehrstufige Zahnstange mit mehreren parallelen Zahnreihen mit unterschiedlicher oder gleicher Höhe, eine fest mit der Hubstange verbundene weitere Zahnstange und zwei drehfest mit einer gemeinsamen Welle verbundene Ritzel mit gleichen oder unterschiedlichen Durchmessern umfasst, wobei das eine der beiden Ritzel mit den Zähnen einer Zahnreihe der mehrstufigen Zahnstange und das andere der beiden Ritzel mit den Zähnen der weiteren Zahnstange kämmt.

Mittels der mehrstufigen Zahnstange können unter Verwendung von Gleichteilen Pipetten für den Gebrauch mit Pipettenspitzen unterschiedlichen Nennvolumens hergestellt werden, bei denen der Bedienweg für die Abgabe des Nennvolumens von Pipettenspitzen unterschiedlicher Größe gleich groß ist. Hierfür werden die Pipetten für Pipettenspitzen mit unterschiedlichen Nennvolumen mit unterschiedlichen Zahnradsätzen bestückt, die in verschiedene Zahnreihen der mehrstufigen Zahnstange eingreifen, um verschiedene Übersetzungen/Untersetzungen zwischen der mehrstufigen Zahnstange und der fest mit der Hubstange verbundenen Zahnstange zu erreichen. Für sämtliche Pipettenvarianten können die gleichen Zahnstangen verwendet werden. Je nach Pipettenvariante müssen nur unterschiedliche Zahnradsätze montiert werden.

Gemäß einer vorteilhaften Ausführungsart weist die Zahnstange drei Zahnreihen mit unterschiedlichen hohen oder gleich hohen Zähnen auf. Gemäß einer weiteren Ausführungsart sind die verschiedenen Zahnreihen in Stufen mit von Stufe zu Stufe ansteigender Höhe nebeneinander angeordnet.

Die vorstehende Erfindung kann vorteilhaft mit der Erfindung gemäß einem der Ansprüche 1 bis 15 oder einer der zuvor erwähnten Ausführungsarten kombiniert werden. Hierbei ist eine der beiden Zahnstangen von Anspruch 2, die mit demselben Zahnrad kämmen, als mehrstufige Zahnstange ausgebildet. Die mehrstufige Zahnstange ist zusätzlich über den Zahnradsatz, der die beiden drehfest mit einer gemeinsamen Welle verbundenen Ritzel aufweist, mit der weiteren Zahnstange gekoppelt, die fest mit der Hubstange verbunden ist.

In der vorliegenden Anmeldung beziehen sich die Angaben "oben" und "unten" sowie "vertikal" und "horizontal" und davon abgeleitete Begriffe wie z. B. "oberhalb" und "unterhalb" sowie "übereinander" auf eine Anordnung der Pipette, bei der das Pipettengehäuse vertikal ausgerichtet ist und sich die erste Halteeinrichtung am nach unten weisenden Ende des Pipettengehäuse befindet. In dieser Ausrichtung ist ein in der ersten Halteeinrichtung gehaltener Zylinder einer Pipettenspitze vertikal ausgerichtet, wobei die Spitzenöffnung unten angeordnet ist.

Die Erfindung wird nachfolgend anhand der anliegenden Zeichnungen von Ausführungsbeispielen näher erläutert. In den Zeichnungen zeigen:
- Fig. 1 eine Pipette mit über ein Mitnehmerelement wechselweise verlagerbaren Zahnstange in einer Anfangsstellung vor dem Pipettieren in einer Vorderansicht;
- Fig. 2 dieselbe Pipette in derselben Stellung in einer vergrößerten Teilansicht von vorne;
- Fig. 3 dieselbe Pipette in derselben Stellung in einer Seitenansicht;
- Fig. 4 dieselbe Pipette in derselben Stellung in einer vergrößerten Teilansicht von der Seite;
- Fig. 5 Zapfen derselben Pipette mit aufgesteckter Pipettenspitze in einem vergrößerten Längsschnitt;
- Fig. 6a-d Auslöser mit Stangenantrieb derselben Pipette in einer Ansicht von der rechten Seite (Fig. 6a), in einer Vorderansicht (Fig. 6b), in einer Ansicht von der linken Seite (Fig. 6c) und in einer Perspektivansicht schräg von oben und von der Seite (Fig. 6d);
- Fig. 7a-c Stangenantrieb, Stützring und Zahnstangen derselben Pipette in einer Ansicht von der rechten Seite (Fig. 7a), in einer Vorderansicht (Fig. 7b) und in einer Perspektivansicht schräg von oben und von der Seite (Fig. 7c);
- Fig. 8 dieselbe Pipette beim Pipettieren nach Durchführung eines Teilhubs in einer Ansicht von der rechten Seite;
- Fig. 9 dieselbe Pipette in derselben Stellung in einer vergrößerten Teilansicht von der rechten Seite;

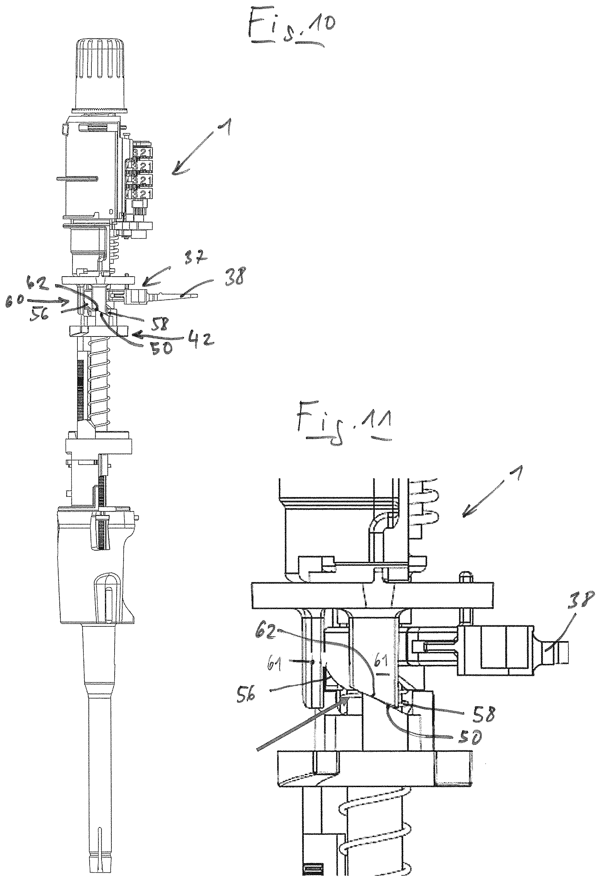

- Fig. 10 dieselbe Pipette beim Pipettieren bei der Rückverlagerung des Auslösers nach oben in die Ausgangsstellung in einer Ansicht von der rechten Seite;
- Fig. 11 dieselbe Pipette in derselben Stellung in einer vergrößerten Teilansicht von der rechten Seite;

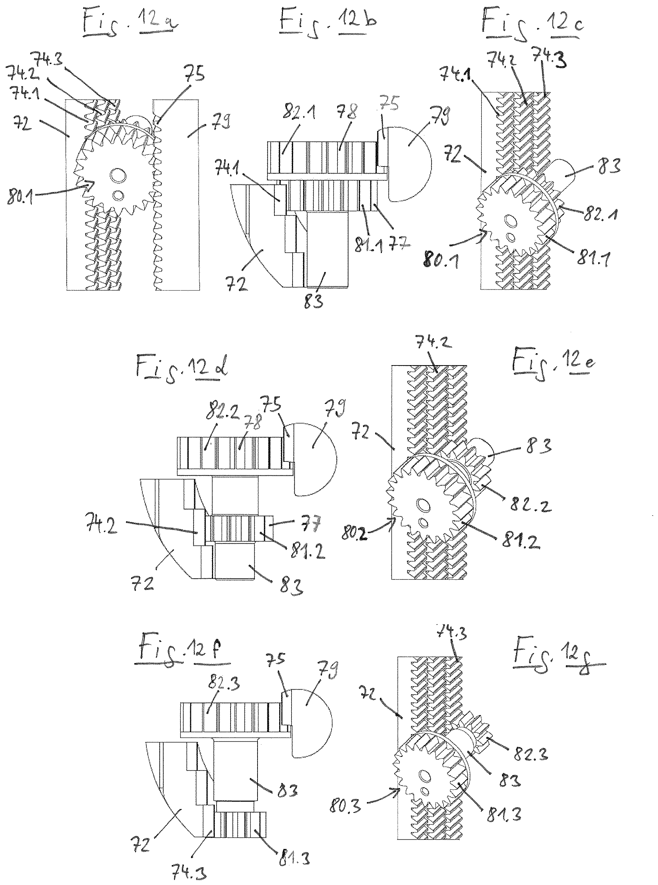

- Fig. 12a-g Anordnung mit dreistufiger Zahnstange, Zahnradsatz und hubstangenseitiger Zahnstange in einer Perspektivansicht schräg von oben und von der Seite (Fig. 12a), in der Draufsicht (Fig. 12b) und ohne hubstangenseitige Zahnstange in einer Perspektivansicht schräg von oben und von der Seite (Fig. 12c), mit einem anderen Zahnradsatz in der Draufsicht (Fig. 12d) und ohne hubstangenseitige Zahnstange in einer Perspektivansicht schräg von oben und von der Seite (Fig. 12e) und mit noch einem anderen Zahnradsatz in der Draufsicht (Fig. 12f) und ohne hubstangenseitige Zahnstange in einer Perspektivansicht schräg von oben und von der Seite (Fig. 12g);
- Fig. 13a-c ein alternatives Getriebe mit einem abwechselnd in Laufbahnen auf verschiedenen Seiten des Mitnehmerelementes geführten Zapfen in einer Vorderansicht (Fig. 13a), in einer ersten Verlagerungsstellung in einer Explosionsansicht schräg von oben und von der Seite (Fig. 13b) und in einer zweiten Verlagerungsstellung in einer Explosionsansicht schräg von oben und von der Seite (Fig. 13c).

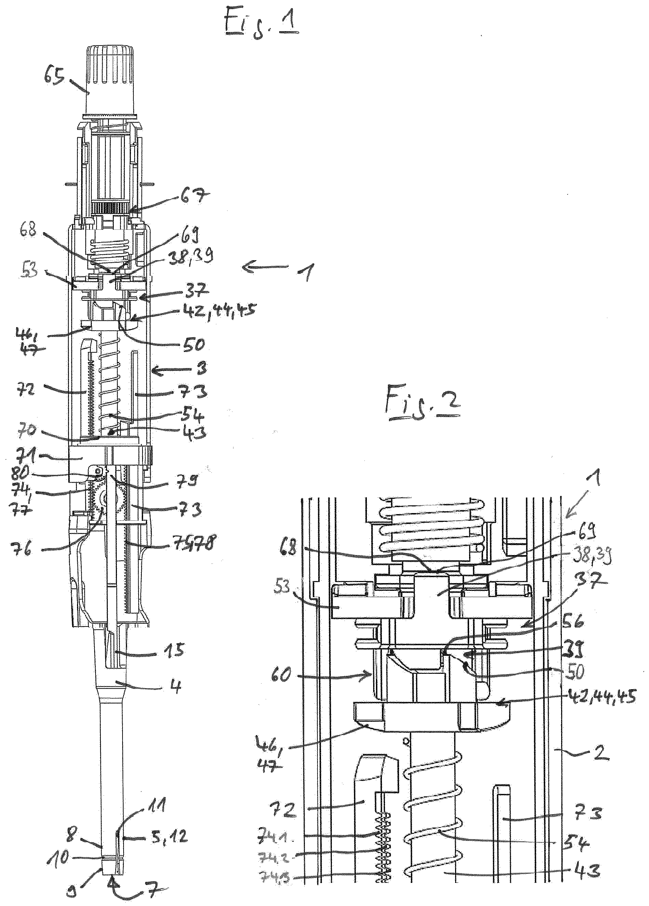

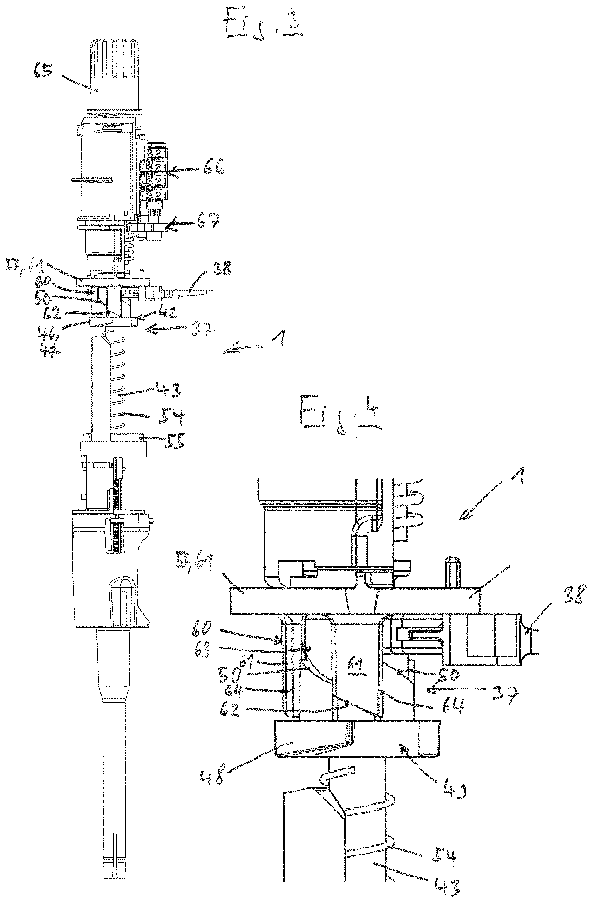

Die Fig. 1 bis 5 zeigen eine als Direktverdrängerpipette ausgebildete Pipette 1, die ein stielförmiges (z. B. zylindrisches) Pipettengehäuse 2 aufweist, das nur in Fig. 2 in Teilansicht gezeigt ist. Im Pipettengehäuse 2 ist ein Chassis 3 angeordnet, an dem verschiedene Bauteile der Pipette 1 gehalten sind. Vom unteren Ende des Pipettengehäuses 2 steht ein hohlzylindrischer Schaft 4 nach unten vor. Vom unteren Ende des Schaftes 4 steht ein Zapfen 5 nach unten vor, der eine Durchgangsbohrung 6 mit einem Durchgangsloch 7 am unteren Ende aufweist.

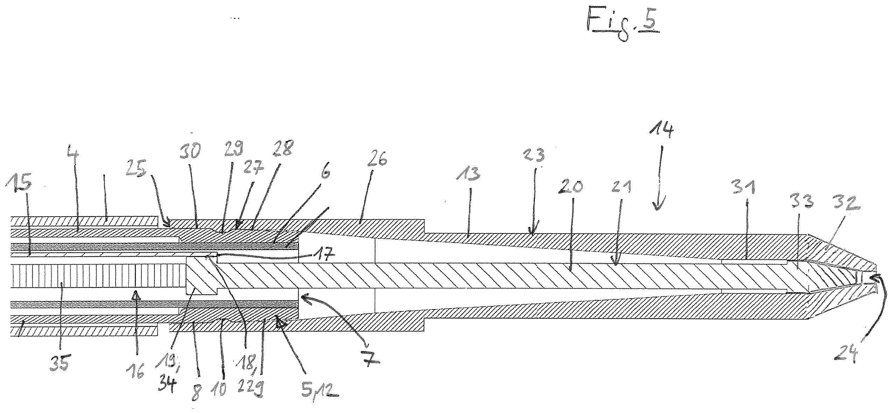

Gemäß Fig. 5 weist der Zapfen 5 einen oberen Zapfenabschnitt 8 mit der Form eines Hohlzylinders und darunter einen unteren Zapfenabschnitt 9 mit der Form eines Hohlkegels auf. Zwischen dem oberen Zapfenabschnitt 8 und dem unteren Zapfenabschnitt 9 läuft auf dem äußeren Umfang des Zapfens 5 eine Ringnut 10 um. Vom unteren Ende des Zapfens 5 aus erstrecken sich zwei einander diametral gegenüberliegende Schlitze 11 über die Ringnut 10 hinweg entlang des Zapfens 5. Der Zapfen 5 ist eine erste Halteeinrichtung 12 zum lösbaren Halten eines Zylinders 13 einer Pipettenspitze 14.

Eine Hubstange 15 ist von oben durch den Schaft 4 in den Zapfen 5 hineingeführt. Die Hubstange 15 ist unten hohlzylindrisch und mit einem vom unteren Ende ausgehenden Längsschlitz 16 versehen. An ihrem unteren Ende 17 bildet die Hubstange 15 eine Aufnahme 18 für das obere Ende 19 einer Kolbenstange 20 eines Kolbens 21 einer Pipettenspitze 14. Die Aufnahme 18 ist eine zweite Halteeinrichtung 22 zum lösbaren Halten des oberen Endes 19 einer Kolbenstange 20 der Pipettenspitze 14.

Fig. 5 zeigt den Zapfen 5 mit einer aufgesteckten Pipettenspitze 14. Die Pipettenspitze 14 umfasst einen rohrförmigen Körper 23, der eine Spitzenöffnung 24 am unteren Ende, einen eine Aufstecköffnung 25 aufweisenden Kragen 26 am oberen Ende und am inneren Umfang des Kragens 26 einen Sitzbereich 27 zum Aufklemmen auf den Zapfen 5 aufweist. Der Sitzbereich 27 hat eine zum Zapfen 5 komplementäre Kontur, die unten einen konischen Sitzabschnitt 28 zum Aufnehmen des konischen unteren Zapfenabschnittes 9, darüber einen umlaufenden Wulst 29 zum Eingreifen in die Ringnut 10 des Zapfens 5 und darüber einen zylindrischen oberen Sitzabschnitt 30 zum Aufnehmen des zylindrischen oberen Zapfenabschnittes 8 aufweist. Beim Aufstecken kann sich der Zapfen 5 im Bereich der Schlitze 11 etwas zusammenziehen und die Pipettenspitze 14 im Sitzbereich 27 etwas aufweiten, bis der Wulst 29 in die Ringnut 10 einschnappt und die Pipettenspitze 14 formschlüssig und reibschlüssig mit dem Zapfen 5 verbunden ist.

Unterhalb des Sitzbereichs 27 weist der rohrförmige Körper 23 einen zylindrischen Kolbenlaufbereich 31 auf. Darunter hat der rohrförmige Körper 23 einen nach unten sich verjüngenden Spitzenabschnitt 32 mit der Form eines Hohlkegelstumpfes. In den rohrförmigen Körper 23 ist ein Kolben 21 eingesetzt. Dieser umfasst einen Dichtbereich 33, der in dem Kolbenlaufbereich 31 geführt ist. Von dem Dichtbereich 33 steht eine Kolbenstange 20 nach oben vor, die einen geringeren Durchmesser als der Dichtbereich 33 aufweist. Am oberen Ende weist die Kolbenstange 20 einen Kolbenkopf 34 auf. Der Kolbenkopf 34 ist gemäß Fig. 5 von unten in die Aufnahme 18 der Hubstange 15 eingepresst.

Innerhalb der Hubstange 15 ist eine Abwurfstange 35 zum Abwerfen der Pipettenspitze vom Zapfen 5 angeordnet. Die Abwurfstange 35 ist mit einem Abwurfantrieb verbunden. Zur Vereinfachung sind Einzelheiten des Abwurfantriebes in den Figuren nicht dargestellt. Der Abwurfantrieb kann insbesondere so ausgebildet sein, wie im europäischen Patent EP3680016 beschrieben.

Die Hubstange 15 dient zum Verlagern des Kolbens 21 im Zylinder 13 der Pipettenspitze 14. Ein außerhalb des Pipettengehäuses angeordnetes Bedienelement 36 in Form eines Bedienknaufes ist über ein im Pipettengehäuse angeordnetes Getriebe 37 mit der Hubstange 15 verbunden. Das Bedienelement 36 ist über einen Bedienhebel 38 mit einem Auslöser 39 des Getriebes 37 verbunden. Der Bedienhebel 38 durchgreift einen vertikalen Schlitz im Pipettengehäuse 2, so dass der Auslöser 39 beim Betätigen des Bedienelementes 36 in vertikaler Richtung verlagerbar ist. Der Auslöser 39 ist ein Antrieb 40 und ein bewegliches Eingangsglied 41 des Getriebes 37.

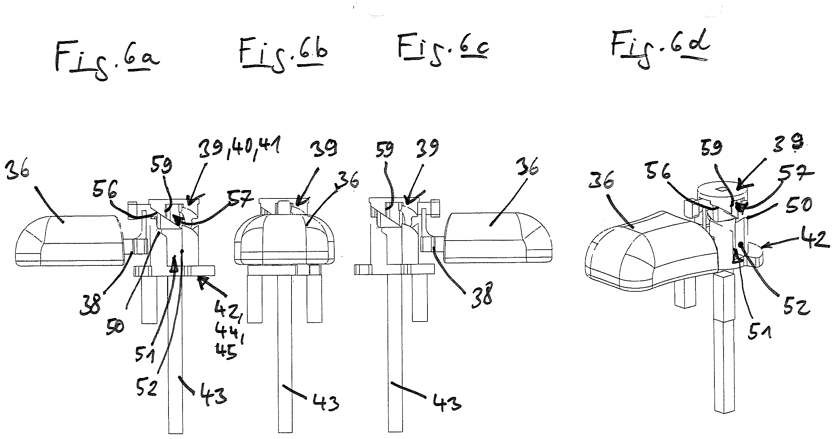

Im Pipettengehäuse 2 ist unterhalb des Auslösers 39 ein Stangenantrieb 42 auf einem vertikalen Führungsrohr 43 drehbar gelagert und vertikal verlagerbar geführt (vgl. Fig. 6). Der Stangenantrieb 42 ist ein Abtrieb 44 und ein bewegliches Ausgangsglied 45 des Getriebes 37. Der Stangenantrieb 42 hat einen im Wesentlichen hohlzylindrischen Körper, der unten ein Mitnehmerelement 46 in Form einer Flügelscheibe 47 aufweist, die zwei einander diametral gegenüberliegende, radial vom Umfang des Stangenantriebs 42 nach außen vorstehende Flügel 48 und dazwischen zwei diametral einander gegenüberliegende Freistiche 49 aufweist. Am Außenumfang weist der Stangenantrieb 42 vier von oben abtastbare erste Steuerkurven 50 und dazwischen vier vertikale erste Führungsnuten 51 auf. Die seitlichen Ränder der vertikalen ersten Führungsnuten 51 des Stangenantriebes bilden erste Führungselemente 52. Die ersten Steuerkurven 50 fallen in derselben Umfangsrichtung ab, die in Fig. 1 von links nach rechts verläuft.

Das vertikale Führungsrohr 43 ist durch ein horizontales erstes Tragelement (Stützring) 53 hindurchgeführt. Auf dem Führungsrohr 43 ist eine Druckfeder 54 in Form einer Schraubenfeder angeordnet, die unten an einem lagefest im Pipettengehäuse angeordneten Widerlager 55 abgestützt ist und oben den Stangenantrieb 42 gegen den Auslöser 39 drückt.

Gemäß Fig. 6 ist auch der Auslöser 39 vertikal verlagerbar auf dem Führungsrohr 43 geführt. Er weist an der Unterseite vier zweite Steuerkurven 56 auf, zwischen denen vertikale Spalte 57 angeordnet sind. Die zweiten Steuerkurven 56 fallen in derselben Umfangsrichtung ab, wie die ersten Steuerkurven 50. Zwischen dem Auslöser 39 und dem Stangenantrieb 42 ist eine auf dem Führungsrohr 43 geführte Distanzfeder 58 in Form einer Schraubenfeder vorhanden, die den Auslöser 39 vom Stangenantrieb 42 wegdrückt.

Ferner weist der Auslöser 39 vertikale Ränder auf, die einen seitlichen Anschlag 59 bilden.

In dem Pipettengehäuse 2 ist lagefest eine hohlzylindrische Steuer- und Führungseinrichtung (Einrichtung) 60 angeordnet, die an der Unterseite des ersten Tragelementes 53 ausgebildet ist. Durch diese Einrichtung 60 ist das Führungsrohr 43 hindurchgeführt. Die Einrichtung 60 ist durch vier parallele Zylinderschalen 61 gebildet, von denen jede unten eine dritte Steuerkurve 62 hat, die von unten abtastbar ist. Die dritten Steuerkurven 62 fallen in derselben Umfangsrichtung ab, wie die ersten Steuerkurven 50. Zwischen den Zylinderschalen 61 weist die Einrichtung 60 vertikale zweite Führungsnuten 63 auf. Die seitlichen Ränder der zweiten Führungsnuten 63 bilden zweite Führungselemente 64.

Auf der Oberseite des Pipettengehäuses 2 ist ein Einstellknopf 65 zum Einstellen eines Dosiervolumens angeordnet. Durch Drehen des Einstellknopfes 65 ist das Dosiervolumen einstellbar. Ein darunter im Pipettengehäuse 2 angeordnetes Zählwerk 66 zeigt das jeweils eingestellte Dosiervolumen an. Der Einstellknopf 65 und das Zählwerk 66 sind über eine Übertragungsmechanik 67 mit einer Gewindespindel gekoppelt, die von oben in das Führungsrohr 43 hineinragt. Oberhalb des Auslösers 39 ist ein mit dem Führungsrohr 43 fest verbundener oberer Anschlag 68 lagefest im Pipettengehäuse 1 angeordnet. Die Verlagerung des Auslösers 39 nach oben wird durch Anlage des Auslösers 39 mit einer oberen Anlagefläche 69 an der Unterseite 68 des Tragelements 53 begrenzt. Nach unten ist der Hub durch das Anschlagen einer von unten in das Führungsrohr 42 hineinragenden Pipettierhubstange an die einstellbare Gewindespindel begrenzt. Somit ist der Hub der Hubstange 15 durch Anschlag einer mittels des Stangenantriebes 42 verlagerbaren Pipettierhubstange an der einstellbaren Gewindespindel begrenzt.

Unterhalb des Mitnehmerelementes 46 sind in einem dritten Tragelement 71 des Chassis 3 zwei vertikal verlagerbare Zahnstangen 72, 73 geführt. Die Zahnreihen 74, 75 der Zahnstangen 72, 73 sind einander zugewandt. Zwischen den beiden Zahnstangen 72, 73 ist am Chassis 3 drehbar ein Zahnrad 76 gelagert, das mit Zähnen 77, 78 beider Zahnstangen 72, 73 kämmt. Durch das Zahnrad 76 sind die beiden Zahnstangen 72, 73 miteinander gekoppelt, so dass sie in vertikaler Richtung nur gegenläufig zueinander verlagerbar sind.

Die Zahnstangen 72, 73 sind unterhalb des Mitnehmerelementes 46 so angeordnet, dass zur gleichen Zeit immer nur ein Flügel 48 oberhalb einer der beiden Zahnstangen 72, 73 und ein Freistich 49 oberhalb der anderen der beiden Zahnstangen 72, 73 positionierbar ist.

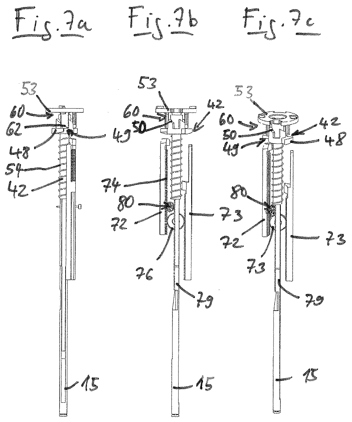

Es ist möglich, die Erfindung so auszuführen, dass eine der beiden Zahnstangen 72, 73 direkt mit der Hubstange 15 verbunden bzw. einteilig mit dieser ausgebildet ist. Bei dem Ausführungsbeispiel ist zwischen der Zahnstange 72 und der Hubstange 15 ein Übersetzungsgetriebe vorhanden. Gemäß Fig. 7b weist die links angeordnete erste Zahnstange 72 drei nebeneinander angeordnete Zahnreihen mit unterschiedlich hohen oder gleich hohe Zähnen 77 in verschiedenen Zahnreihen 74.1, 74.2, 74.3 auf.

Die Zahnreihen 74.1, 74.2, 74.3 bilden drei nebeneinander angeordnete Stufen. Die in Fig. 7b rechte zweite Zahnstange 73 hat nur eine einzige Zahnreihe 75. Die Hubstange 15 ist am oberen Ende fest mit einer Zähne 78 aufweisenden dritten Zahnstange 79 verbunden, die vorzugsweise einteilig mit dieser ausgebildet ist. Zwischen der ersten Zahnstange 72 mit den drei Zahnreihen 74.1, 74.2, 74.3 und der dritten Zahnstange 79 ist ein Zahnradsatz 80 mit zwei Ritzeln 81, 82 mit gleichen oder unterschiedlichen Durchmessern angeordnet. Die Ritzel 81, 82 des Zahnradsatzes 80 sind drehfest mit einer Welle 83 verbunden, die drehbar im Chassis 3 gelagert ist. Ein erstes Ritzel 81 kämmt mit den Zähnen 78 der dritten Zahnstange 79 und ein zweites Ritzel 82 kämmt mit den Zähnen 77 einer der Zahnreihen 74.1, 74.2, 74.3 der ersten Zahnstange 72. Auf diese Weise wird ein definiertes Übersetzungsverhältnis zwischen der Verlagerung der ersten Zahnstange 72 und der dritten Zahnstange 79 hergestellt.

Die dritte Zahnstange 79 ist die Pipettierhubstange, deren Verlagerung nach oben durch die einstellbare Gewindespindel begrenzt ist.

Wenn aus der Ausgangsstellung gemäß Fig. 1 bis 4 das Bedienelement 36 nach unten gedrückt wird, so wird zunächst der Auslöser 39 entgegen der Wirkung der Distanzfeder 58 nach unten verlagert, bis die zweite Steuerkurve 56 an der ersten Steuerkurve 50 anliegt. Bei weiterer Verlagerung des Bedienelementes 36 nach unten nimmt der Auslöser 39 den Stangenantrieb 42 nach unten mit. Hierbei wird der Stangenantrieb 42 durch Anlage eines ersten Führungselementes 52 an einem zweiten Führungselement 64 an einer Drehung um das Führungsrohr 43 gehindert.

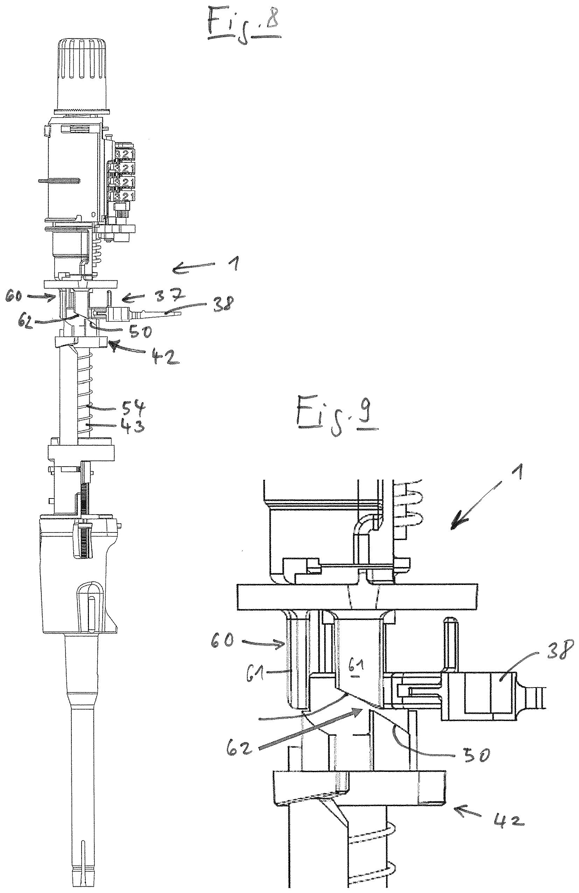

Gemäß Fig. 7 und 8 erreicht nach einem Teilhub (z. B. 10% des Hubes für die Abgabe des Nennvolumens aus der Pipettenspitze) das obere Ende des ersten Führungselementes 52 das untere Ende des zweiten Führungselementes 64. In Folge dessen wird bei weiterer Verlagerung des Auslösers 39 nach unten durch die zweite Steuerkurve 56 der Stangenantrieb 42 an der ersten Steuerkurve 50 unter die dritte Steuerkurve 62 gedreht, bis das erste Führungselement 52 am seitlichen Anschlag 59 des Auslösers 39 anliegt. Dies ist beispielsweise bei einer Drehung von 8 Grad der Fall. Bei der weiteren Verlagerung des Auslösers 39 nach unten wird der Stangenantrieb 42 entgegen der Wirkung der Druckfeder 54 nach unten mitgenommen, bis einer der Flügel 48 des Mitnehmerelementes 46 auf das obere Ende einer der Zahnstangen 72, 73 aufsitzt. Danach wird die Zahnstange 72 oder 73 mitgenommen und ein Hub der Hubstange 15 ausgeführt, bis die dritte Zahnstange 79 gegen die Gewindespindel anschlägt. Die jeweils andere Zahnstange 72, 73 kann sich durch einen Freistich 49 des Mitnehmerelementes 46 hindurch nach oben bewegen.

Nach Entlastung des Bedienelementes 36 wird durch die Wirkung der Distanzfeder 58 der Auslöser 39 vom Stangenantrieb 42 weggedrückt. Hierdurch wird das untere Ende des seitlichen Anschlages 59 über das obere Ende des ersten Führungselementes 52 hinaus verlagert, so dass das erste Führungselement 52 vom seitlichen Anschlag 59 freikommt. Da die Druckfeder 54 von unten gegen den Stangenantrieb 42 drückt, gleitet die erste Steuerkurve 50 an der dritten Steuerkurve 62 ab und wird der Stangenantrieb 42 weiter gedreht, bis ein erstes Führungselement 52 an einem zweiten Führungselement 64 des Stützringes 60 anliegt. Danach wird der Stangenantrieb 42 durch die Druckfeder 54 zurück nach oben verlagert. Die Zahnstangen 72, 73 behalten ihre Position am Ende der Verlagerung des Stangenantriebes 42 nach unten bei. Der Stangenantrieb 42 wird durch die Druckfeder 54 soweit nach oben verlagert, bis das Mitnehmerelement 46 oberhalb der oberen Enden beider Zahnstangen 72, 73 angeordnet ist. Durch diese Drehung des Stangenantriebs 42 wird ein Freistrich 49 über der zuletzt nach unten verlagerten Zahnstange 72, 73 und ein Flügel 48 über der zuletzt nach oben verlagerten Zahnstange 72, 73 positioniert. Bei einer weiteren Betätigung des Bedienelementes 36 wird folglich die zuletzt nach oben verlagerte Zahnstange 72, 73 nach unten und dementsprechend die zuletzt nach unten verlagerte Zahnstange 62, 73 nach oben verlagert.

Die Pipette 1 kann folgendermaßen verwendet werden:
Gemäß Fig. 5 wird zunächst eine Pipettenspitze 14 mit dem Sitzbereich 27 auf den Zapfen 5 aufgeklemmt, so dass der Wulst 29 in die Ringnut 10 eingreift. Gleichzeitig wird die Aufnahme 18 auf das obere Ende 19 der Kolbenstange 20 gepresst.

Für die Aufnahme von Flüssigkeit wird die Pipette 1 mit dem unteren Ende der daran gehaltenen Pipettenspitze 14 in die Flüssigkeit eingetaucht. Danach wird das Bedienelement 36 nach unten gedrückt. Hierbei wird durch den Stangenantrieb 42 die Zahnstange 72 nach unten verlagert und die Hubstange 15 nach oben bewegt. Hierbei wird der Kolben 21 nach oben verlagert und Flüssigkeit in die Pipettenspitze 14 eingesaugt.

Wenn das Bedienelement 36 den eingestellten Hub ausgeführt hat, ist die Pipettenspitze 14 mit einer bestimmten Flüssigkeitsmenge gefüllt. Danach wird das Bedienelement 36 entlastet und durch die Druckfeder 54 und die Distanzfeder 58 nach oben bis zur Anlage am oberen Anschlag 68 verlagert.

Für die Abgabe der aufgenommenen Flüssigkeitsmenge kann die Pipette 1 mit der Pipettenspitze 14 auf ein anderes Gefäß ausgerichtet werden. Durch erneutes Drücken des Bedienelementes 36 nach unten wird wiederum die Zahnstange 72 nach unten verlagert, wodurch die Hubstange 15 nach unten verlagert und die Flüssigkeitsmenge aus der Pipettenspitze 14 abgegeben wird.

Die Aufgabe und Abgabe von Flüssigkeit kann mehrfach durchgeführt werden. Für den Wechsel der Pipettenspitze 14 wird eine zusätzliche Abwurfeinrichtung benutzt oder die Pipettenspitze 14 wird von Hand vom Zapfen 5 abgenommen und aus der Aufnahme der Hubstange 15 herausgezogen.

Gemäß Fig. 12 können mithilfe der mehrstufigen ersten Zahnstange 72 vorteilhaft Pipetten 1 für die Verwendung mit Pipettenspitzen 14 mit verschiedenen Nennvolumen unter weitgehender Verwendung von Gleichteilen genutzt werden. Hierfür müssen die verschiedenen Pipetten 1 nur mit unterschiedlichen Zahnradsätzen 80 ausgestattet werden, welche die erste Zahnstange 72 mit der dritten Zahnstange 79 koppeln.

Gemäß Fig. 12a bis c wird hierfür ein Zahnradsatz 80.1 verwendet, der zwei nebeneinanderliegende Ritzel 81.1, 82.1 mit gleichem oder unterschiedlichem Durchmesser aufweist, von denen eines in die tiefste Zahnreihe 74.1 der ersten Zahnstange 72 eingreift und das andere mit der dritten Zahnstange 79 kämmt. Diese Ausführungsart ist beispielsweise für die Verwendung mit Pipettenspitzen mit Nennvolumen von 10 µl und 100 µl bestimmt. Da sich die Nennvolumen durch eine Zehnerpotenz voneinander unterscheiden, kann die Ablesung des eingestellten Nennvolumens mittels desselben Zählwerkes erfolgen. Gegebenenfalls kann dieses eine verlagerbare Markierung aufweisen, die durch die jeweils verwendete Pipettenspitze eingestellt wird, die hierfür einen unterschiedlich hohen Kragen aufweisen können. Eine solche automatische Einstellung des Zählwerkes ist im europäischen Patent EP3560596 beschrieben.

Gemäß Fig. 12d und e kämmt die dritte Zahnstange 79 mit einem Ritzel 81.2 derselben Ausführung wie bei Fig. 12a bis c. Zudem weist der Zahnradsatz 80.2 ein Ritzel 82.2 mit kleinerem Durchmesser auf, das mit der mittleren Zahnreihe 74.2 der ersten Zahnstange 72 kämmt. Hierdurch wird eine andere Übersetzung bzw. Untersetzung zwischen der Verlagerung der dreistufigen ersten Zahnstange 72 und der dritten Zahnstange 79 erreicht.

Gemäß Fig. 12f und g kämmt ein wie in Fig. 12a bis c ausgebildetes Ritzel 81.3 mit den Zähnen der dritten Zahnstange 79. Zudem weist der Zahnradsatz 80.3 ein Ritzel 81.3 mit einem noch kleineren Durchmesser als bei Fig. 12d und e auf, das mit den Zähnen der höchsten Zahnreihe 74.3 der ersten Zahnstange 72 kämmt. Hierdurch wird eine andere Übersetzung bzw. Untersetzung als bei Fig. 12a bis e erreicht.

Hierdurch kann der Hub des Bedienelementes 36 für die Abgabe des Nennvolumens für Pipettenspitzen 14 unterschiedlicher Größe gleich gehalten werden.

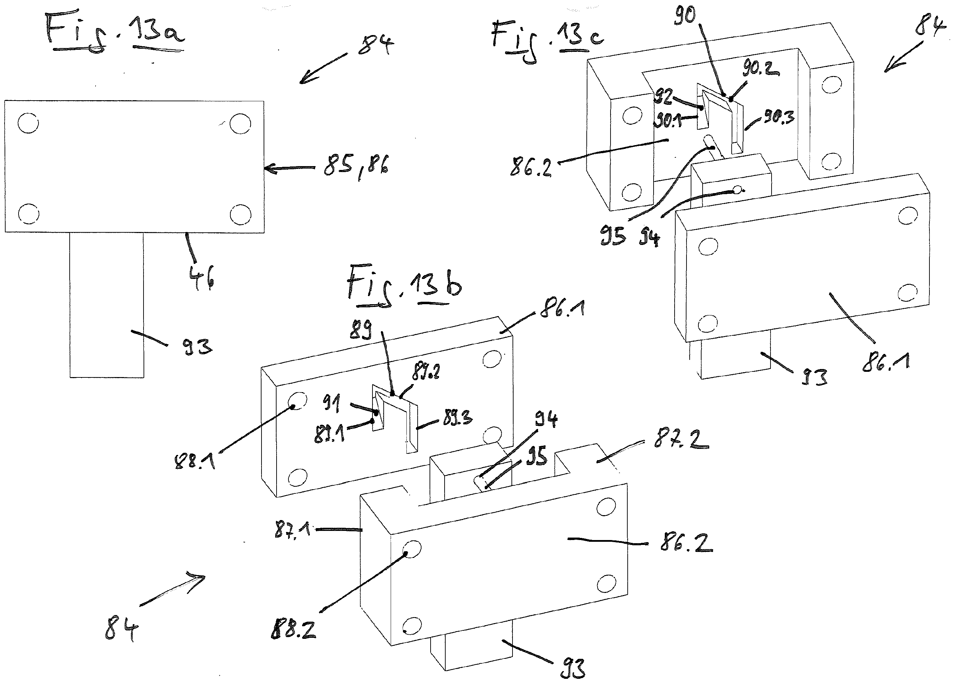

Gemäß Fig. 13 weist ein weiteres Getriebe 84 für die wechselseitige Ansteuerung zweiter Zahnstangen 72, 73 einen Laufbahnträger 85 auf. Dieser ist als Rahmen 86 ausgebildet, der zwei parallele, plattenförmige Rahmenteile 86.1, 86.2 und zwei leistenförmige Abstandshalter 87.1, 87.2 umfasst. Die Abstandshalter 87.1, 87.2 verlaufen entlang der vertikalen Ränder des Rahmenteiles 86.2 und sind einteilig mit diesem ausgebildet. Neben den vertikalen Rändern haben beide Rahmenteile Bohrlöcher 88.1, 88.2 zum Verschrauben der beiden Rahmenteile 86.1, 86.2 miteinander. Zwischen den Rahmenteilen 86.1, 86.2 wird somit ein Kanal ausgebildet. Anstatt der Bohrlöcher und Schrauben können auch Zapfen und Bohrungen zum Verpressen, Schnapphaken zum Verklippsen etc. der Rahmenteile 86.1, 86.2 vorhanden sein.

An den einander zugewandten Innenseiten der Rahmenteile 86.1, 86.2 sind Laufbahnen 89, 90 in Form von Nuten ausgebildet. Diese haben jeweils einen vertikalen ersten Abschnitt 89.1, 90.1, der am Grund eine Auflaufschräge 91, 92 aufweist, sodass die Tiefe des ersten Abschnittes 89.1, 90.1 jeweils von oben nach unten abnimmt. An das obere Ende des ersten Abschnittes 89.1, 90.1 der Laufbahn schließt sich jeweils ein abgewinkelter zweiter Abschnitt 89.2, 90.2 der Laufbahn an. An das untere Ende des zweiten Abschnittes schließt sich jeweils ein vertikal nach unten erstreckter dritter Abschnitt 89.3, 90.3 der Laufbahn an. Der dritte Abschnitt 89.3, 90.3 erstreckt sich weiter nach unten als der erste Abschnitt 89.1, 90.1.

Die beiden Laufbahnen 89, 90 sind spiegelbildlich zueinander ausgebildet, sodass der erste Abschnitt 89.1 der ersten Laufbahn 89 und der dritte Abschnitt 90.3 der zweiten Laufbahn 90 in derselben zu den plattenförmigen Rahmenteilen 86.1, 86.2 senkrechten Vertikalebene angeordnet sind. Ferner sind der dritte Abschnitt 89.3 der ersten Laufbahn 89 und der erste Abschnitt 90.1 der zweiten Laufbahn 90 in derselben zu den Rahmenteilen 86.1, 86.2 senkrechten Vertikalebene angeordnet. Schließlich sind die zweiten Abschnitte 89.2, 90.2 der ersten und der zweiten Laufbahn 89, 90 in derselben zu den Rahmenteilen senkrechten und zur Vertikalen geneigten Ebene angeordnet.

Zwischen den beiden Rahmenteilen 86.1, 86.2 ist ein leistenförmiger Zapfenträger 93 angeordnet. Dieser ist an den beiden Außenseiten an den Innenseiten der plattenförmigen Rahmenteile 86.1, 86.2 geführt. Der Zapfenträger 93 weist ein Zapfenlager 94 auf, das in Form einer zu den Rahmenteilen 86.1, 86.2 senkrechten Durchgangsbohrung ausgebildet ist. In das Zapfenlager 94 ist ein Führungszapfen 95 eingesetzt, dessen Länge die Tiefe des Zapfenträgers 93 übersteigt. Wenn der Führungszapfen 95 auf der einen Seite des Zapfenträgers 93 bündig mit seiner Außenseite in das Zapfenlager 94 eingeschoben ist, steht er auf der anderen Seite maximal so weit vom Zapfenträger 93 vor, wie der zweite Abschnitt 89.2, 90.2 und der dritte Abschnitt der nutenförmigen Laufbahn 89, 90 tief ist.

Der Zapfenträger 93 steht oben und unten über den Rahmen 86 hinaus.

Der Zapfenträger 93 ist am oberen Ende und am unteren Ende lagefest im Pipettengehäuse 2 fixiert.

Die Unterseite des Rahmens 86 bildet ein Mitnehmerelement 96 zum wechselweisen Verlagern zweier Zahnstangen 72, 73 für das Steuern der Aufwärts- und Abwärtsbewegung einer Hubstange 15.

Eines der beiden Rahmenteile 86.1, 86.2 ist auf der Außenseite mit einer horizontalen Steuerungszapfenführung versehen, die vorzugsweise als Nut ausgebildet ist.

Das Bedienelement 36 ist mit einem Steuerzapfen an der Steuerzapfenführung geführt. Vorzugsweise ist das Bedienelement 36 über einen Bedienhebel 38 mit dem Steuerzapfen verbunden, wobei der Bedienhebel 38 einen Schlitz im Pipettengehäuse 2 durchgreifen kann.

Das weitere Getriebe funktioniert wie folgt:
Ausgegangen wird beispielsweise von einer Anfangsstellung, in der sich der Führungszapfen 95 am oberen Ende des ersten Abschnittes 89.1 der ersten Laufbahn 89 befindet. Beim Verlagern des Bedienelements 36 nach oben wird der Führungszapfen 95 von der Auflaufschrägen 91 der ersten Laufbahn 89 in den dritten Abschnitt 90.3 der zweiten Laufbahn 90 gedrückt. Der Rahmen 86 ist weiter nach oben verlagerbar, bis der Führungszapfen am unteren Ende des dritten Abschnittes 90.3 der zweiten Laufbahn 90 anliegt.

Durch nachfolgendes Verlagern des Bedienelementes 36 nach unten wird der Führungszapfen 95 entlang des dritten Abschnittes 90.3 und des zweiten Abschnittes 90.2 der zweiten Laufbahn 90 nach oben bewegt. Hierbei kann eine Zahnstange 72, 73 durch das Mitnehmerelement 96 nach unten verlagert werden. Bei der Verlagerung entlang des zweiten Abschnittes 90.2 wird der Laufbahnträger 85 seitlich verlagert, da der Zapfenträger 93 im Pipettengehäuse 2 festgehalten ist. Da der Steuerzapfen in die horizontale Steuerzapfenführung eingreift, wird die seitliche Verlagerung des Laufbahnträgers 85 nicht verhindert.

Bei einer nachfolgenden Aufwärtsbewegung des Bedienelements 36 wird der Führungszapfen 95 entlang der Auflaufschrägen 92 der zweiten Laufbahn 90 bewegt und hierdurch in den dritten Abschnitt 89.3 der ersten Laufbahn 89 hineingeschoben. Der Laufbahnträger 85 kann weiter nach oben verlagert werden, bis der Führungszapfen 95 am unteren Ende der dritten Laufbahn 89.3 anliegt.

Beim nachfolgenden Verlagern des Bedienelementes 36 nach unten wird der Führungszapfen 95 zunächst im dritten Abschnitt 89.3 und dann im zweiten Abschnitt 89.2 der ersten Laufbahn 89 nach oben verlagert. Hierbei kann die andere Zahnstange 72, 73 durch das Mitnehmerelement 96 nach unten verlagert werden. Bei der Verlagerung im zweiten Abschnitt 89.2 wird der Laufbahnträger 95 seitlich in die Anfangsstellung zurückbewegt. Danach kann derselbe Bewegungszyklus wiederholt werden.

### Bezugszeichenliste

- 1: Pipette
- 2: Pipettengehäuse
- 3: Chassis
- 4: Schaft
- 5: Zapfen
- 6: Durchgangsbohrung
- 7: Durchgangsloch
- 8: oberer Zapfenabschnitt
- 9: unterer Zapfenabschnitt
- 10: Ringnut
- 11: Schlitze
- 12: erste Halteeinrichtung
- 13: Zylinder
- 14: Pipettenspitze
- 15: Hub stange
- 16: Längsschlitz
- 17: unteres Ende der Hubstange
- 18: Aufnahme
- 19: oberes Ende der Kolbenstange
- 20: Kolbenstange
- 21: Kolben
- 22: Halteeinrichtung
- 23: rohrförmiger Körper
- 24: Spitzenöffnung
- 25: Aufstecköffnung
- 26: Kragen
- 27: Sitzbereich
- 28: konischer Sitzabschnitt
- 29: Wulst
- 30: oberer Sitzabschnitt
- 31: Kolbenlaufbereich
- 32: Spritzenabschnitt
- 33: Dichtbereich
- 34: Kolbenkopf
- 35: Abwurfstange
- 36: Bedienelement
- 37: Getriebe
- 38: Bedienhebel
- 39: Auslöser
- 40: Antrieb
- 41: Eingangsglied
- 42: Stangenantrieb
- 43: Führungsrohr
- 44: Abtrieb
- 45: Ausgangsglied
- 46: Mitnehmerelement
- 47: Flügelscheibe
- 48: Flügel
- 49: Freistich
- 50: erste Steuerkurve
- 51: erste Führungsnut
- 52: erstes Führungselement
- 53: erstes Tragelement
- 54: Druckfeder
- 55: Widerlager
- 56: zweite Steuerkurve
- 57: Spalt
- 58: Distanzfeder
- 59: seitlicher Anschlag
- 60: Steuer- und Führungseinrichtung
- 61: Zylinderschale
- 62: dritte Steuerkurve
- 63: zweite Führungsnut
- 64: zweites Führungselement
- 65: Einstellknopf
- 66: Zählwerk
- 67: Übertragungsmechanik
- 68: Unterseite
- 69: obere Anlagefläche
- 70: unterer Anschlag
- 71: drittes Tragelement
- 72: erste Zahnstange
- 73: zweite Zahnstange
- 74, 74.1, 74.2, 74.3: Zahnreihe
- 75: Zahnreihe
- 76: Zahnrad
- 77, 78: Zahn
- 79: dritte Zahnstange
- 80.1, 80.2, 80.3: Zahnradsatz
- 81: erstes Ritzel
- 82: zweites Ritzel
- 83: Welle
- 84: Getriebe
- 85: Laufbahnträger
- 86: Rahmen
- 86.1, 86.2: Rahmenteil
- 87.1, 87.2: Abstandshalter
- 88.1, 88.2: Bohrloch
- 89: erste Laufbahn
- 90: zweite Laufbahn
- 89.1, 90.1: erster Abschnitt der Laufbahn
- 89.2, 90.2: zweiter Abschnitt der Laufbahn
- 89.3, 90.3: dritter Abschnitt der Laufbahn
- 91, 92: Auflaufschräge
- 93: Zapfenträger
- 94: Zapfenlager
- 95: Führungszapfen

## Patentansprüche

1. Pipette für den Gebrauch mit einer einen Kolben und einen Zylinder aufweisenden Pipettenspitze oder Spritze umfassend
• ein stielförmiges Pipettengehäuse (2),
• eine erste Halteeinrichtung (12) am unteren Ende des Pipettengehäuses (2) zum lösbaren Halten des Zylinders (13),
• eine im Pipettengehäuse (2) angeordnete Hubstange (15) mit einer zweiten Halteeinrichtung (22) am unteren Ende zum lösbaren Halten des oberen Endes einer Kolbenstange (20) des Kolbens (21) und Verlagern eines Dichtbereichs (33) des Kolbens (21) in einem Kolbenlaufbereich (31) oberhalb einer Spitzenöffnung (24) am unteren Ende des Zylinders (13),
• eine Anordnung aus zwei parallelen und zur gleichzeitigen Verlagerung in entgegengesetzten Richtungen über eine Umlenkeinrichtung (76) miteinander gekoppelten Stangen (72, 73) im Pipettengehäuse (2), wobei eine der beiden Stangen (72, 73) mit der Hubstange (15) gekoppelt ist,
• ein vom Pipettengehäuse (2) nach außen vorstehendes, relativ zum Pipettengehäuse (2) in axialer Richtung der Hubstange (15) verlagerbares Bedienelement (36) und
• ein im Pipettengehäuse (2) angeordnetes Getriebe (37) mit einem durch das Bedienelement (36) angetriebenen Antrieb (40) und einem die Stangen (72, 73) antreibenden Abtrieb (44), wobei der Antrieb (40) aus einem beweglichen Eingangsglied (41) besteht, der Abtrieb (44) mindestens ein bewegliches Ausgangsglied (45) umfasst und das Getriebe (37) ausgebildet ist, bei aufeinanderfolgenden Verlagerungen des Eingangsliedes (41) aus derselben Ausgangsstellung durch das Bedienelement (36) abwechselnd mit dem Ausgangsglied (45) die eine Stange (72, 73) und die andere Stange (72, 73) nach unten zu verlagern und bei der das Ausgangsglied (45) des Getriebes (37) ein Mitnehmerelement (46) ist und das Getriebe (37) ausgebildet ist, das Mitnehmerelement (46) wechselweise in eine Position oberhalb der einen Stange (72, 73) zu verlagern und diese mittels des Mitnehmerelements (46) nach unten zu verlagern und nachfolgend in eine Position oberhalb der anderen Stange (72, 73) zu verlagern und diese mittels des Mitnehmerelementes (46) nach unten zu verlagern, **dadurch gekennzeichnet, dass**
• das Mitnehmerelement (46) eine um eine zu den Stangen (72, 73) parallele Achse drehbar gelagerte Flügelscheibe (47) ist, die bei aufeinanderfolgenden Verlagerungen des Eingangsgliedes (41) aus einer Ausgangsstellung abwechselnd mit einem Flügel (48) oberhalb der einen Stange (72, 73) und zugleich mit einem Freistich (49) oberhalb der anderen Stange (72, 73) und mit einem Freistich (49) oberhalb der einen Stange (72, 73) und zugleich mit einem Flügel (48) oberhalb der anderen Stange (72, 73) positionierbar ist

2. Pipette nach Anspruch 1, bei der die beiden Stangen Zahnstangen (72, 73) sind und die Umlenkeinrichtung ein Zahnrad (76) ist, welches mit den beiden Zahnstangen (72, 73) kämmt, um diese gleichzeitig in entgegengesetzte Richtungen zu verlagern.

3. Pipette nach Anspruch 1 oder 2, bei der das Getriebe (37) einen das Mitnehmerelement (46) umfassenden Stangenantrieb (42) mit mindestens einer von oben abtastbaren und in einer Umfangsrichtung abfallenden ersten Steuerkurve (50) und mindestens einem ersten Führungselement (52), einen mittels des Bedienelementes (36) in axialer Richtung der Stange (72, 73) von oben gegen die erste Steuerkurve (50) andrückbaren Auslöser (39) mit einem seitlichen Anschlag (59) und mindestens ein lagefest im Pipettengehäuse angeordnetes zweites Führungselement (64) aufweist, das den Stangenantrieb (42) an einem ersten Führungselement (52) in Axialrichtung führt, sodass bei einer axialen Verlagerung des Auslösers (39) nach unten der Stangenantrieb (42) in Axialrichtung geführt wird, bis das obere Ende des ersten Führungselementes (52) über das untere Ende des zweiten Führungselementes (64) hinaus verlagert ist und dann der Stangenantrieb (42) mit der ersten Steuerkurve (50) bis zur Anlage des ersten Führungselementes (52) an dem seitlichen Anschlag (59) des Auslösers (39) teilweise unter das untere Ende des zweiten Führungselementes (64) gedreht wird, und bei einer Rückverlagerung des Auslösers (39) nach oben das erste Führungselement (52) vom seitlichen Anschlag (59) freikommt, wenn das untere Ende des ersten Führungselements (52) über das obere Ende des seitlichen Anschlags (59) hinaus verlagert ist, und der Stangenantrieb (42) mit der ersten Steuerkurve (50) am unteren Ende des zweiten Führungselementes (64) vorbei gleitet, bis der Stangenantrieb (42) mit dem ersten Führungselement (52) in eine an einem zweiten Führungselement (64) anliegende Position gedreht ist.

4. Pipette nach Anspruch 3, bei der der Auslöser (39) mindestens eine von unten abtastbare, in derselben Umfangsrichtung abfallende zweite Steuerkurve (56) aufweist, mit der der Auslöser (39) von oben gegen die erste Steuerkurve (50) andrückbar ist.

5. Pipette nach Anspruch 3 oder 4, bei der das erste Führungselement (52) am unteren Ende mindestens eine von unten abtastbare, in derselben Umfangsrichtung abfallende dritte Steuerkurve (62) aufweist, an der die erste Steuerkurve (50) bei der Rückverlagerung des Auslösers (39) nach oben vorbeigleitet.

6. Pipette nach einem der Ansprüche 3 bis 5, bei der der Auslöser (39) von einer am Stangenantrieb (42) abgestützten Distanzfeder (58) vom Stangenantrieb (42) weggedrückt wird.

7. Pipette nach einem der Ansprüche 3 bis 6, bei der der Stangenantrieb (42) von einer an einem lagefest im Pipettengehäuse (2) angeordneten Widerlager (55) abgestützten Druckfeder (54) gegen den Auslöser (39) gedrückt wird.

8. Pipette für den Gebrauch mit einer einen Kolben und einen Zylinder aufweisenden Pipettenspitze oder Spritze umfassend
• ein stielförmiges Pipettengehäuse (2),
• eine erste Halteeinrichtung (12) am unteren Ende des Pipettengehäuses (2) zum lösbaren Halten des Zylinders (13),
• eine im Pipettengehäuse (2) angeordnete Hubstange (15) mit einer zweiten Halteeinrichtung (22) am unteren Ende zum lösbaren Halten des oberen Endes einer Kolbenstange (20) des Kolbens (21) und Verlagern eines Dichtbereichs (33) des Kolbens (21) in einem Kolbenlaufbereich (31) oberhalb einer Spitzenöffnung (24) am unteren Ende des Zylinders (13),
• eine Anordnung aus zwei parallelen und zur gleichzeitigen Verlagerung in entgegengesetzten Richtungen über eine Umlenkeinrichtung (76) miteinander gekoppelten Stangen (72, 73) im Pipettengehäuse (2), wobei eine der beiden Stangen (72, 73) mit der Hubstange (15) gekoppelt ist,
• ein vom Pipettengehäuse (2) nach außen vorstehendes, relativ zum Pipettengehäuse (2) in axialer Richtung der Hubstange (15) verlagerbares Bedienelement (36) und
• ein im Pipettengehäuse (2) angeordnetes Getriebe (37) mit einem durch das Bedienelement (36) angetriebenen Antrieb (40) und einem die Stangen (72, 73) antreibenden Abtrieb (44), wobei der Antrieb (40) aus einem beweglichen Eingangsglied (41) besteht, der Abtrieb (44) mindestens ein bewegliches Ausgangsglied (45) umfasst und das Getriebe (37) ausgebildet ist, bei aufeinanderfolgenden Verlagerungen des Eingangsliedes (41) aus derselben Ausgangsstellung durch das Bedienelement (36) abwechselnd mit dem Ausgangsglied (45) die eine Stange (72, 73) und die andere Stange (72, 73) nach unten zu verlagern und bei der das Ausgangsglied (45) des Getriebes (37) ein Mitnehmerelement (46) ist und das Getriebe (37) ausgebildet ist, das Mitnehmerelement (46) wechselweise in eine Position oberhalb der einen Stange (72, 73) zu verlagern und diese mittels des Mitnehmerelements (46) nach unten zu verlagern und nachfolgend in eine Position oberhalb der anderen Stange (72, 73) zu verlagern und diese mittels des Mitnehmerelementes (46) nach unten zu verlagern, **dadurch gekennzeichnet, dass**
• das Getriebe (84) einen das Mitnehmerelement (46) und eine horizontale Steuerzapfenführung aufweisenden Laufbahnträger (85) mit auf verschiedenen Seiten einer vertikalen ersten Ebene angeordneten Laufbahnen (89, 90) aufweist, die auf verschiedenen Seiten einer zu der ersten Ebene senkrechten zweiten Ebene jeweils einen vertikalen ersten Abschnitt (89.1, 90.1) mit einer zum unteren oder oberen Ende hin ansteigenden Auflaufschräge (91, 92) und am anderen Ende des ersten Abschnittes (89.1, 89.2) jeweils einen zu der anderen Seite der zweiten Ebene hin abgewinkelten oder gekrümmten zweiten Abschnitt (89.2, 90.2) aufweisen, bei dem das Getriebe (84) ferner einen mit dem Bedienelement (36) verbundenen und an einer Steuerzapfenführung horizontal verlagerbar geführten Steuerzapfen aufweist und bei dem das Getriebe (84) einen lagefest im Pipettengehäuse (2) angeordneten Zapfenträger (93) mit einem Zapfenlager (94), in dem ein Führungszapfen (95) senkrecht zu der ersten Ebene verlagerbar angeordnet ist, aufweist, sodass bei einer vertikalen Verlagerung des Laufbahnträgers (85) der Führungszapfen (95) an einem von dem Zapfenträger (93) vorstehenden Ende von der Auflaufschräge (91, 92) der einen Laufbahn (89, 90) verlagerbar ist, bis der Führungszapfen (95) mit dem anderen Ende in die andere Laufbahn (89, 90) eingreift, in der er bei der nachfolgenden Verlagerung des Laufbahnträgers (85) in entgegengesetzter Richtung entlang des abgewinkelten oder gekrümmten zweiten Abschnittes (89.1, 90.1) geführt und hierdurch der Laufbahnträger (85) mit dem Mitnehmerelement (46) seitlich verlagert wird, der Führungszapfen (95) bei einer nachfolgenden vertikalen Verlagerung des Laufbahnträgers (85) in entgegengesetzter Richtung an dem vorstehenden Ende von der Auflaufschrägen (91, 92) der anderen Laufbahn (89, 90) verlagert wird, sodass er mit dem anderen Ende in die eine Laufbahn eingreift, in der der Führungszapfen (95) bei einer nachfolgenden vertikalen Verlagerung des Laufbahnträgers (85) in entgegengesetzter Richtung entlang des abgewinkelten oder gekrümmten zweiten Abschnittes (89.2) geführt und hierdurch der Laufbahnträger (85) mit dem Mitnehmerelement (46) in entgegengesetzter Richtung seitlich verlagert wird.

9. Pipette nach Anspruch 8, bei der der Laufbahnträger einen Rahmen (86) mit zwei parallelen plattenförmigen Rahmenteilen (86.1, 86.2) aufweist, die durch Abstandshalter (87.1, 87.2) voneinander auf Abstand gehalten sind, die Laufbahnen (89, 90) an den Innenseiten aufweisen und zwischen denen der Zapfenträger (93) angeordnet ist.

10. Pipette nach Anspruch 8 oder 9, bei der das Mitnehmerelement (46) die Unterseite des Laufbahnträgers (85) ist.

11. Pipette nach einem der Ansprüche 1 bis 10, bei der das Getriebe (37, 84) oberhalb der Zahnstangen (69, 70) angeordnet ist.

12. Pipette nach einem der Ansprüche 1 bis 11, bei der das Getriebe (37, 84) eine Baugruppe ist.

13. Pipette nach einem der Ansprüche 1 bis 12, bei der eine der beiden Zahnstangen (72, 73) eine mehrstufige Zahnstange (72) ist, die zusätzlich über einen Zahnradsatz (80), der zwei drehfest mit einer gemeinsamen Welle (83) verbundene Ritzel (81, 82) aufweist, mit einer weiteren Zahnstange (89) gekoppelt ist, die fest mit der Hubstange (15) verbunden ist.

## Claims

1. A pipette for use with a pipette tip or syringe having a piston and a cylinder, comprising:
• a stem-shaped pipette housing (2),
• a first holding apparatus (12) at the lower end of the pipette housing (2) for detachably holding the cylinder (13),
• a lifting rod (15) arranged in the pipette housing (2) with a second holding apparatus (22) at the lower end for detachably holding the upper end of a piston rod (20) of the piston (21) and displacing a sealing region (33) of the piston (21) in a piston running region (31) above a tip opening (24) at the lower end of the cylinder (13),
• an arrangement made up of two parallel rods (72, 73) in the pipette housing (2) which are coupled to one another via a deflection apparatus (76) for simultaneous displacement in opposing directions, wherein one of the two rods (72, 73) is coupled to the lifting rod (15),
• an operating element (36) protruding outwardly from the pipette housing (2) which can be displaced relative to the pipette housing (2) in the axial direction of the lifting rod (15), and
• a gear mechanism (37) arranged in the pipette housing (2) and comprising a drive (40) driven by the operating element (36) and an output (44) driving the rods (72, 73), wherein the drive (40) consists of a movable input member (41), the output (44) comprises at least one movable output member (45) and the gear mechanism (37) is configured, during successive displacements of the input member (41) from the same initial position by the operating element (36), to displace alternately the one rod (72, 73) and the other rod (72, 73) downwardly with the output member (45), and in which the output member (45) of the gear mechanism (37) is a driver element (46) and the gear mechanism (37) is configured to displace the driver element (46) alternately into a position above the one rod (72, 73) and to displace said one rod by means of the driver element (46) downwardly and subsequently into a position above the other rod (72, 73) and to displace said other rod by means of the driver element (46) downwardly,
**characterized in that**
• the driver element (46) is a wing disk (47) rotatably mounted about an axis parallel to the rods (72, 73), which wing disk, during successive displacements of the input member (41) from an initial position, can be positioned alternately with a wing (48) above the one rod (72, 73) and at the same time with an undercut (49) above the other rod (72, 73), and with an undercut (49) above the one rod (72, 73) and at the same time with a wing (48) above the other rod (72, 73).

2. The pipette according to Claim 1, in which the two rods are toothed rods (72, 73) and the deflection apparatus is a gearwheel (76) which meshes with the two toothed rods (72, 73) in order to displace said toothed rods simultaneously in opposing directions.

3. The pipette according to Claim 1 or 2, in which the gear mechanism (37) has a rod drive (42) comprising the driver element (46), said rod drive having at least one first control cam (50) which can be activated by contact from above and which slopes in a peripheral direction and at least one first guide element (52), an actuator (39) comprising a lateral stop (39), which can be pushed from above by means of the operating element (36) in the axial direction of the rod (72, 73) against the first control cam (50), and at least one second guide element (64) arranged fixedly in position in the pipette housing and which guides the rod drive (42) on a first guide element (52) in the axial direction, so that during an axial displacement of the actuator (39) downwardly, the rod drive (42) is guided in the axial direction until the upper end of the first guide element (52) is displaced beyond the lower end of the second guide element (64), and then the rod drive (42) with the first control cam (50) is rotated until the first guide element (52) bears against the lateral stop (59) of the actuator (39) partially below the lower end of the second guide element (64), and during a return displacement of the actuator (39) upwardly the first guide element (52) is released from the lateral stop (59) when the lower end of the first guide element (52) is displaced beyond the upper end of the lateral stop (59), and the rod drive (42) with the first control cam (50) slides past the lower end of the second guide element (64) until the rod drive (42) with the first guide element (52) is rotated into a position bearing against a second guide element (64).

4. The pipette according to Claim 3, in which the actuator (39) has at least one second control cam (56) which can be activated by contact from below and which slopes in the same peripheral direction, with which second control cam the actuator (39) can be pushed from above against the first control cam (50).

5. The pipette according to Claim 3 or 4, in which the first guide element (52) has at the lower end at least one third control cam (62) which can be activated by contact from below and which slopes in the same peripheral direction, the first control cam (50) sliding upwardly past said third control cam during the return displacement of the actuator (39).

6. The pipette according to one of Claims 3 to 5, in which the actuator (39) is pushed away from the rod drive (42) by a spacer spring (58) supported on the rod drive (42).

7. The pipette according to one of Claims 3 to 6, in which the rod drive (42) is pushed against the actuator (39) by a compression spring (54) supported on an abutment (55) arranged fixedly in position in the pipette housing (2).

8. A pipette for use with a pipette tip or syringe having a piston and a cylinder, comprising:
• a stem-shaped pipette housing (2),
• a first holding apparatus (12) at the lower end of the pipette housing (2) for detachably holding the cylinder (13),
• a lifting rod (15) arranged in the pipette housing (2) with a second holding apparatus (22) at the lower end for detachably holding the upper end of a piston rod (20) of the piston (21) and displacing a sealing region (33) of the piston (21) in a piston running region (31) above a tip opening (24) at the lower end of the cylinder (13),
• an arrangement made up of two parallel rods (72, 73) in the pipette housing (2) which are coupled to one another via a deflection apparatus (76) for simultaneous displacement in opposing directions, wherein one of the two rods (72, 73) is coupled to the lifting rod (15),
• an operating element (36) protruding outwardly from the pipette housing (2) which can be displaced relative to the pipette housing (2) in the axial direction of the lifting rod (15), and
• a gear mechanism (37) arranged in the pipette housing (2) and comprising a drive (40) driven by the operating element (36) and an output (44) driving the rods (72, 73), wherein the drive (40) consists of a movable input member (41), the output (44) comprises at least one movable output member (45) and the gear mechanism (37) is configured, during successive displacements of the input member (41) from the same initial position by the operating element (36), to displace alternately the one rod (72, 73) and the other rod (72, 73) downwardly with the output member (45), and in which the output member (45) of the gear mechanism (37) is a driver element (46) and the gear mechanism (37) is configured to displace the driver element (46) alternately into a position above the one rod (72, 73) and to displace said one rod by means of the driver element (46) downwardly and subsequently into a position above the other rod (72, 73), and to displace said other rod by means of the driver element (46) downwardly,
**characterized in that**
• the gear mechanism (84) has a track carrier (85) having the driver element (46) and a horizontal control pin guide with tracks (89, 90) arranged on different sides of a vertical first plane, which tracks have in each case on different sides of a second plane perpendicular to the first plane a vertical first portion (89.1, 90.1) with a lead-in chamfer (91, 92) rising to the lower or upper end and in each case at the other end of the first portion (89.1, 89.2) a second portion (89.2, 90.2) which is angled-back or curved to the other side of the second plane, in which the gear mechanism (84) further has a control pin which is connected to the operating element (36) and which is displaceably guided horizontally on a control pin guide, and in which the gear mechanism (84) has a pin carrier (93) arranged fixedly in position in the pipette housing (2) with a pin bearing (94) in which a guide pin (95) is displaceably arranged perpendicular to the first plane so that, during a vertical displacement of the track carrier (85), the guide pin (95) can be displaced at an end protruding from the pin carrier (93) by the lead-in chamfer (91, 92) of the one track (89, 90) until the guide pin (95) engages with the other end in the other track (89, 90), in which said guide pin, during the subsequent displacement of the track carrier (85) in the opposing direction, is guided along the angled-back or curved second portion (89.1, 90.1) and, as a result, the track carrier (85) is laterally displaced with the driver element (46), during a subsequent vertical displacement of the track carrier (85) in the opposing direction, the guide pin (95) is displaced at the protruding end by the lead-in chamfers (91, 92) of the other track (89, 90), so that said guide pin engages with the other end in the one track in which the guide pin (95), during a subsequent vertical displacement of the track carrier (85) in the opposing direction, is guided along the angled-back or curved second portion (89.2) and, as a result, the track carrier (85) is laterally displaced with the driver element (46) in the opposing direction.

9. The pipette according to Claim 8, in which the track carrier has a frame (86) with two parallel plate-shaped frame parts (86.1, 86.2) which are kept at a distance from one another by spacers (87.1, 87.2) and which have tracks (89, 90) on the inner sides, between which the pin carrier (93) is arranged.

10. The pipette according to Claim 8 or 9, in which the driver element (46) is the lower side of the track carrier (85).

11. The pipette according to one of Claims 1 to 10, in which the gear mechanism (37, 84) is arranged above the toothed rods (69, 70).

12. The pipette according to one of Claims 1 to 11, in which the gear mechanism (37, 84) is a sub-assembly.

13. The pipette according to one of Claims 1 to 12, in which one of the two toothed rods (72, 73) is a multi-stage toothed rod (72) which is additionally coupled via a gear set (80), which has two pinions (81, 82) connected in a non-rotational manner to a common shaft (83), to a further toothed rod (89) which is fixedly connected to the lifting rod (15).

## Revendications

1. Pipette destinée à être utilisée avec une pointe de pipette ou une seringue présentant un piston et un cylindre, comportant
• un boîtier de pipette (2) en forme de manche,
• un premier dispositif de maintien (12) à l'extrémité inférieure du boîtier de pipette (2) pour le maintien détachable du cylindre (13),
• une tige de levage (15) disposée dans le boîtier de pipette (2), avec un deuxième dispositif de maintien (22) à l'extrémité inférieure pour le maintien détachable de l'extrémité supérieure d'une tige de piston (20) du piston (21) et pour le déplacement d'une région d'étanchéité (33) du piston (21) dans une région de course de piston (31) au-dessus d'une ouverture de pointe (24) à l'extrémité inférieure du cylindre (13),
• un ensemble composé de deux tiges (72, 73) parallèles, accouplées entre elles par le biais d'un dispositif de déviation (76) pour le déplacement simultané dans des direction opposées dans le boîtier de pipette (2), l'une des deux tiges (72, 73) étant accouplée à la tige de levage (15),
• un élément d'actionnement (36) faisant saillie vers l'extérieur à partir du boîtier de pipette (2), déplaçable par rapport au boîtier de pipette (2) dans une direction axiale de la tige de levage (15) et
• un engrenage (37) disposé dans le boîtier de pipette (2), avec un entraînement (40) entraîné par l'élément d'actionnement (36) et une sortie (44) entraînant les tiges (72, 73), dans laquelle l'entraînement (40) est constitué d'un organe d'entrée mobile (41), la sortie (44) comporte au moins un organe de sortie mobile (45) et l'engrenage (37) est conçu pour déplacer tantôt une tige (72, 73) et tantôt l'autre tige (72, 73) vers le bas avec l'organe de sortie (45) lors de déplacements consécutifs de l'organe d'entrée (41) depuis la même position de départ par l'élément d'actionnement (36), et dans laquelle l'organe de sortie (45) de l'engrenage (37) est un élément entraîneur (46) et l'engrenage (37) est conçu pour déplacer alternativement l'élément entraîneur (46) vers une position au-dessus de l'une des tiges (72, 73) et déplacer celle-ci vers le bas au moyen de l'élément entraîneur (46) et pour ensuite le déplacer vers une position au-dessus de l'autre tige (72, 73) et déplacer celle-ci vers le bas au moyen de l'élément entraîneur (46),
**caractérisée en ce que**
• l'élément entraîneur (46) est un disque à ailettes (47) monté de façon rotative autour d'un axe parallèle aux tiges (72, 73), lequel peut être positionné tantôt avec une ailette (48) au-dessus d'une tige (72, 73) et simultanément avec un dégagement (49) au-dessus de l'autre tige (72, 73) et tantôt avec un dégagement (49) au-dessus d'une tige (72, 73) et simultanément avec une ailette (48) au-dessus de l'autre tige (72, 73) lors de déplacements consécutifs de l'organe d'entrée (41) depuis une position de départ.

2. Pipette selon la revendication 1, dans laquelle les deux tiges sont des crémaillères (72, 73) et le dispositif de déviation est une roue dentée (76), laquelle engrène avec les deux crémaillères (72, 73) afin de déplacer celles-ci simultanément dans des directions opposées.

3. Pipette selon la revendication 1 ou 2, dans laquelle l'engrenage (37) présente un entraînement de tige (42) comportant l'élément entraîneur (46), avec au moins une première courbe de commande (50) explorable depuis le haut et descendante dans une direction circonférentielle et au moins un premier élément de guidage (52), un déclencheur (39) avec une butée latérale (59), lequel peut être pressé depuis le haut contre la première courbe de commande (50) au moyen de l'élément d'actionnement (36) dans la direction axiale de la tige (72, 73), et au moins un deuxième élément de guidage (64) disposé fixe en position dans le boîtier de pipette, lequel guide l'entraînement de tige (42) sur un premier élément de guidage (52) dans la direction axiale, de telle façon que lors d'un déplacement axial du déclencheur (39) vers le bas, l'entraînement de tige (42) est guidé dans la direction axiale jusqu'à ce que l'extrémité supérieure du premier élément de guidage (52) soit déplacée au-delà de l'extrémité inférieure du deuxième élément de guidage (64), et ensuite l'entraînement de tige (42) est tourné partiellement sous l'extrémité inférieure du deuxième élément de guidage (64) avec la première courbe de commande (50) jusqu'à ce que le premier élément de guidage (52) entre en contact avec la butée latérale (59) du déclencheur (39), et lors d'un renvoi du déclencheur (39) vers le haut, le premier élément de guidage (52) se dégage de la butée latérale (59) lorsque l'extrémité inférieure du premier élément de guidage (52) est déplacée au-delà de l'extrémité supérieure de la butée latérale (59), et l'entraînement de tige (42) passe devant l'extrémité inférieure du deuxième élément de guidage (64) avec la première courbe de commande (50) jusqu'à ce que l'entraînement de tige (42) soit tourné avec le premier élément de guidage (52) dans une position appliquée sur le deuxième élément de guidage (64).

4. Pipette selon la revendication 3, dans laquelle le déclencheur (39) présente au moins une deuxième courbe de commande (56) explorable depuis le bas, descendante dans la même direction circonférentielle, avec laquelle le déclencheur (39) peut être pressé depuis le haut contre la première courbe de commande (50).

5. Pipette selon la revendication 3 ou 4, dans laquelle le premier élément de guidage (52) présente une troisième courbe de commande (62) explorable depuis le bas, descendante dans la même direction circonférentielle, au niveau de laquelle la première courbe de commande (50) passe vers le haut lors du renvoi du déclencheur (39).

6. Pipette selon l'une des revendications 3 à 5, dans laquelle le déclencheur (39) est écarté de l'entraînement de tige (42) par un ressort d'espacement (58) appuyé sur l'entraînement de tige (42).

7. Pipette selon l'une des revendications 3 à 6, dans laquelle l'entraînement de tige (42) est pressé contre le déclencheur (39) par un ressort de pression (54) appuyé sur un contre-appui (55) disposé fixe en position dans le boîtier de pipette (2).

8. Pipette destinée à être utilisée avec une pointe de pipette ou une seringue présentant un piston et un cylindre, comportant
• un boîtier de pipette (2) en forme de manche,
• un premier dispositif de maintien (12) à l'extrémité inférieure du boîtier de pipette (2) pour le maintien détachable du cylindre (13),
• une tige de levage (15) disposée dans le boîtier de pipette (2), avec un deuxième dispositif de maintien (22) à l'extrémité inférieure pour le maintien détachable de l'extrémité supérieure d'une tige de piston (20) du piston (21) et pour le déplacement d'une région d'étanchéité (33) du piston (21) dans une région de course de piston (31) au-dessus d'une ouverture de pointe (24) à l'extrémité inférieure du cylindre (13),
• un ensemble composé de deux tiges (72, 73) parallèles, accouplées entre elles par le biais d'un dispositif de déviation (76) pour le déplacement simultané dans des direction opposées dans le boîtier de pipette (2), l'une des deux tiges (72, 73) étant accouplée à la tige de levage (15),
• un élément d'actionnement (36) faisant saillie vers l'extérieur à partir du boîtier de pipette (2), déplaçable par rapport au boîtier de pipette (2) dans une direction axiale de la tige de levage (15) et
• un engrenage (37) disposé dans le boîtier de pipette (2), avec un entraînement (40) entraîné par l'élément d'actionnement (36) et une sortie (44) entraînant les tiges (72, 73), dans laquelle l'entraînement (40) est constitué d'un organe d'entrée mobile (41), la sortie (44) comporte au moins un organe de sortie mobile (45) et l'engrenage (37) est conçu pour déplacer tantôt une tige (72, 73) et tantôt l'autre tige (72, 73) vers le bas avec l'organe de sortie (45) lors de déplacements consécutifs de l'organe d'entrée (41) depuis la même position de départ par l'élément d'actionnement (36), et dans laquelle l'organe de sortie (45) de l'engrenage (37) est un élément entraîneur (46) et l'engrenage (37) est conçu pour déplacer alternativement l'élément entraîneur (46) vers une position au-dessus de l'une des tiges (72, 73) et déplacer celle-ci vers le bas au moyen de l'élément entraîneur (46) et pour ensuite le déplacer vers une position au-dessus de l'autre tige (72, 73) et déplacer celle-ci vers le bas au moyen de l'élément entraîneur (46),
**caractérisée en ce que**
• l'engrenage (84) présente un support de piste (85) présentant l'élément entraîneur (46) et un guidage de tenon de commande horizontal, avec des pistes (89, 90) disposées sur différents côtés d'un premier plan vertical, lesquelles présentent, sur différents côtés d'un deuxième plan perpendiculaire au premier plan, respectivement une première section verticale (89.1, 90.1) avec une pente d'engagement (91, 92) montant vers l'extrémité inférieure ou supérieure et respectivement une deuxième section (89.2, 90.2) coudée ou courbée vers l'autre côté du deuxième plan à l'autre extrémité de la première section (89.1, 90.1), l'engrenage (84) présente en outre un tenon de commande relié à l'élément d'actionnement (36) et guidé de façon déplaçable horizontalement sur un guidage de tenon de commande, et l'engrenage (84) présente un support de tenon (93) disposé fixe en position dans le boîtier de pipette (2) avec un palier de tenon (94), dans lequel un tenon de guidage (95) est disposé de façon déplaçable perpendiculairement au premier plan, de telle façon que lors d'un déplacement vertical du support de piste (85), le tenon de guidage (95) peut être déplacé à une extrémité faisant saillie sur le support de tenon (93) par la pente d'engagement (91, 92) de l'une des pistes (89, 90), jusqu'à ce que le tenon de guidage (95) s'engage avec l'autre extrémité dans l'autre piste (89, 90), dans laquelle il est guidé le long de la deuxième section coudée ou courbée (89.1, 90.1) lors du déplacement consécutif du support de piste (85) dans une direction opposée, et le support de piste (85) est par conséquent déplacé latéralement avec l'élément entraîneur (46), le tenon de guidage (95) est déplacé à l'extrémité faisant saillie par la pente d'engagement (91, 92) de l'autre piste (89, 90) lors du déplacement vertical consécutif du support de piste (85) dans la direction opposée, de manière à s'engager avec l'autre extrémité dans une piste dans laquelle le tenon de guidage (95) est guidé le long de la deuxième section coudée ou courbée (89.2) lors d'un déplacement vertical consécutif du support de piste (85) dans la direction opposée, et le support de piste (85) est par conséquent déplacé latéralement avec l'élément entraîneur (46) dans la direction opposée.

9. Pipette selon la revendication 8, dans laquelle le support de piste présente un cadre (86) avec deux parties de cadre en forme de plaques (86.1, 86.2) parallèles, lesquelles sont maintenues à distance l'une de l'autre par des espaceurs (87.1, 87.2), présentent les pistes (89, 90) sur les côtés intérieurs et entre lesquelles est disposé le support de tenon (93).

10. Pipette selon la revendication 8 ou 9, dans laquelle l'élément entraîneur (46) est le côté inférieur du support de piste (85).

11. Pipette selon l'une des revendications 1 à 10, dans laquelle l'engrenage (37, 84) est disposé au-dessus des crémaillères (69, 70).

12. Pipette selon l'une des revendications 1 à 11, dans laquelle l'engrenage (37, 84) est un module.

13. Pipette selon l'une des revendications 1 à 12, dans laquelle l'une des deux crémaillères (72, 73) est une crémaillère à plusieurs étages (72), laquelle est en outre accouplée à une autre crémaillère (89) reliée fixement à la tige de levage (15), par le biais d'un jeu de roues dentées (80) présentant deux pignons (81, 82) reliés de façon solidaire en rotation à un arbre commun (83).
